(19) **Europäisches Patentamt / European Patent Office / Office européen des brevets**

(11) **EP 2 266 934 B1**

(12) **EUROPEAN PATENT SPECIFICATION**

(45) Date of publication and mention
of the grant of the patent:
**29.04.2015 Bulletin 2015/18**

(21) Application number: **09725245.6**

(22) Date of filing: **23.03.2009**

(51) Int Cl.:
*C04B 35/486* ^(2006.01)    *C04B 35/488* ^(2006.01)
*G04B 37/22* ^(2006.01)

(86) International application number:
**PCT/JP2009/055646**

(87) International publication number:
**WO 2009/119495 (01.10.2009 Gazette 2009/40)**

(54) **CERAMIC FOR DECORATIVE PART**

KERAMIK FÜR DEKORATIVES TEIL

CÉRAMIQUE POUR ÉLÉMENT DÉCORATIF

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **24.03.2008 JP 2008075252
25.06.2008 JP 2008165275**

(43) Date of publication of application:
**29.12.2010 Bulletin 2010/52**

(73) Proprietor: **Kyocera Corporation
Kyoto-shi
Kyoto 612-8501 (JP)**

(72) Inventor: **MIKAKI, Shunji
Satsumasendai-shi
Kagoshima 895-0292 (JP)**

(74) Representative: **Hoffmann Eitle
Patent- und Rechtsanwälte PartmbB
Arabellastraße 30
81925 München (DE)**

(56) References cited:
| | |
|---|---|
| **EP-A1- 1 550 644** | **EP-A2- 0 826 645** |
| **JP-A- 1 157 462** | **JP-A- 1 157 462** |
| **JP-A- 9 198 038** | **JP-A- 9 198 038** |
| **JP-A- 10 081 562** | **JP-A- 63 185 857** |
| **JP-A- 63 185 857** | **JP-A- 63 311 910** |
| **JP-A- 2004 059 374** | **JP-A- 2004 059 374** |
| **JP-A- 2005 020 769** | **JP-A- 2005 119 941** |
| **JP-A- 2006 342 036** | **JP-A- 2006 342 036** |

## Description

Technical Field

The present invention relates to a ceramic for decorative part used in a decorative part for watch, a decorative part for mobile terminal, a decorative part for fish line guide, a decorative part for musical instrument, a decorative part for sports goods, decorative part for accessory, a decorative part for building materials, a decorative part for kitchen, a decorative part for vehicle, and a decorative part for household appliances and religious handicraft, and particularly to a decorative part for watch, such as wristwatch case or band links; decorative part for mobile terminal such as various keys that is operated by pushing, and case; a decorative part for fish line guide, such as a fish line guide ring; a decorative part for daily life articles, such as a soap case or a coffee cup set; a decorative part for vehicle supplies, such as an emblem of a manufacturer or a model name, or a corner pole; a decorative part for sports goods, such as an accessory of a golf club, or studs of spiked shoes; a decorative part for musical instrument, such as a base plate of a guitar; and a decorative part for accessory, such as a case of an earphone unit, or a bridge of eyeglasses.

Background Art

Zirconia ceramics are used as a decorative part because of excellent mechanical properties and processability of a surface state, and zirconia ceramics with various color tones have been proposed due to a diversity of preference.

For example, Patent Document 1 proposes a slide member made of brown zirconia ceramics comprising 1.0 to 8.0% by weight of alumina, 0.3 to 3.0% by weight of carbon, 2% by weight or more of cerium oxide as a stabilizing agent, wherein the total content of cerium oxide and dysprosium oxide is within a range from 3.5 to 9.0% by weight and balance is mainly zirconia. When this slide member made of brown zirconia ceramics is used as a thread guide of a fish line guide, it is possible to satisfactorily guide over a long period of time without damaging a yarn because of low friction, excellent corrosion resistance and wear resistance as well as excellent slidability with a yarn of synthetic fibers and , and to make it possible to impart excellent decorativeness because of a development of beautiful brown color with luster.

Patent Document 2 proposes colored zirconia ceramics comprising zirconia as a main component, a stabilizing agent and 0.1 to 10% by weight of chromium oxide. Therefore, the colored zirconia ceramics have vivid green color and enable appearance of a smooth mirror surface with deep luster peculiar to zirconia ceramics per se, and also have properties such as high strength and high toughness, and thus it is possible to produce excellent decorative parts such as watch case, clock face, tiepin, spike stud, bracelet, ring, button and pendant.

Patent Document 3 describes a black zirconia sintered body comprising a partially stabilized zirconia as a main component and a colorant component consisting of at least one oxide selected from the group of oxides of the group 2a, 4a, 6a and 8 elements, the amount of the at least one oxide being between 0.1 and 0.8 wt.% in terms of the amount of any oxide and between 0.2 and 3.0 wt.% in total. The described black zirconia sintered body is useful mainly as a decorative component and has a deep color tone, which is homogeneous and smooth throughout the sintered body.

Prior Art Documents

Patent Document 1: JP-A-2000-72543
Patent Document 2: JP-A-61-141668
Patent Document 3 : EP 0 826 645 A2

Disclosure of the Invention

Problems to be Solved by the Invention

However, although the slide member made of brown zirconia ceramics described in Patent Document 1 and the colored zirconia ceramics described in Patent Document 2 are excellent in corrosion resistance, wear resistance and mechanical properties, and also have beautiful brown color tone and vivid green color tone with luster and are excellent in decorativeness, they do not have deep color tone that is spotlighted particularly in Europe. In the decorative part with deep color tone, since its color tone with quietness and subduedness can allow users to feel dignified impression, high-grade impression and aesthetic satisfaction, zirconia ceramics having deep color tone are required.

The present invention has been devised so as to solve the problems described above, and an object thereof is to provide a ceramic for decorative part with dark color tone with quietness and subduedness that allows users to feel dignified impression, high-grade impression and aesthetic satisfaction; and a decorative part for watch, a decorative part for mobile terminal, a decorative part for fish line guide, a decorative part for daily life articles, a decorative part for vehicle supplies, a decorative part for sports goods, a decorative part for musical instrument and a decorative part for accessory, each using the ceramic for decorative part.

Means for Solving the Problems

The ceramic for decorative part of the present invention comprises zirconia containing a stabilizing agent as a main component; iron oxide; chromium oxide; aluminum oxide; and hafnium oxide, wherein the contents of iron oxide, chromium oxide and aluminum oxide are as defined in (i) or (ii) below:

(i) iron oxide not less than 0.5% by mass nor more than 5.0% by mass, chromium oxide not less than 0.1 % by mass nor more than 1.0% by mass, and aluminum oxide not less than 0.3% by mass nor more than 2.0% by mass;

(ii) iron oxide not less than 0.05% by mass and less than 0.5% by mass, chromium oxide not less than 0.5% by mass nor more than 3.0% by mass, and aluminum oxide not less than 0.05% by mass nor more than 0.8% by mass.

Effects of the Invention

According to the ceramic for decorative part of the present invention, since zirconia containing a stabilizing agent as the main component, iron oxide, chromium oxide, aluminum oxide and hafnium oxide are contained, it is possible to provide a ceramic for decorative part in which dark color tone with quietness and subduedness allows users to feel dignified impression, high-grade impression and aesthetic satisfaction, by combining zirconia and aluminum oxide, each having a white color, iron oxide having a red color or black color depending on the degree of oxidation, and chromium oxide having a green color.

Brief Description of the Drawings

Fig. 1 shows an example of a watch case that is a decorative part for watch of the present invention, Fig. 1(a) is a perspective view of the watch case as seen from the front surface, and Fig. 1(b) is a perspective view of the watch case of Fig. 1(a) as seen from the back surface.
Fig. 2 is a perspective view showing another example of a watch case that is a decorative part for watch of the present invention.
Fig. 3 is a schematic view showing an example of the constitution of a watch band that is a decorative part for watch of the present invention.
Fig. 4 is a perspective view showing an example of a mobile phone that uses a decorative part for mobile terminal of the present invention.
Fig. 5 is a perspective view showing the mobile phone of the example shown in Fig. 4 in a state of chassis opened.
Fig. 6 shows an example of a fish line guide ring that is a decorative part for fish line guide of the present invention, and a fish line guide provided with the fish line guide ring, Fig. 6(a) is a perspective view of the fish line guide ring, and Fig. 6(b) is a perspective view of a fish line guide having the fish line guide ring shown in Fig. 6(a).
Fig. 7 is a schematic view showing an example of the constitution of a soap case that is a decorative part for daily life articles of the present invention.
Fig. 8 is a perspective view showing an example of a coffee cup set that is a decorative part for daily life articles of the present invention.
Fig. 9 is a perspective view showing an example of a vehicle body having a decorative part for vehicle supplies of the present invention mounted thereon.
Fig. 10 is a plan view showing an example of a corner pole that uses a decorative part for vehicle supplies of the present invention.
Fig. 11 is a plan view showing an example of a golf club that uses a decorative part for sports goods of the present invention.
Fig. 12 is a bottom view showing an example of spiked shoes that uses a decorative part for sports goods of the present invention.
Fig. 13 is a perspective view showing an example of a guitar that uses a decorative part for musical instrument of the present invention.
Fig. 14 is a plan view showing an example of an earphone unit that uses a decorative part for accessory of the present invention.

Fig. 15 is a perspective view showing an example of eyeglasses that uses a decorative part for accessory of the present invention.

Best Mode for Carrying Out the Invention

Embodiments of ceramics for decorative part of the present invention will be described below.

The ceramics for decorative part of the present invention comprises zirconia containing a stabilizing agent ($ZrO_2$) as a main component, iron oxide ($Fe_2O_3$), chromium oxide ($Cr_2O_3$), aluminum oxide ($Al_2O_3$) and hafnium oxide. As the stabilizing agent, for example, at least one kind selected from a group consisting of yttrium oxide ($Y_2O_3$), cerium oxide ($CeO_2$), dysprosium oxide ($Dy_2O_3$), magnesium oxide (MgO), neodymium oxide ($Nd_2O_3$) and calcium oxide (CaO) may be used.

The main component as used herein is a component that occupies 50% by mass or more based on 100% by mass of all components constituting the ceramics for decorative part. Zirconia containing the stabilizing agent as the main component has an advantage, high mechanical properties such as strength and fracture toughness. Therefore, in the ceramics for decorative part of the present invention, the content of zirconia is preferably 70% by mass or more, and more preferably 90% by mass or more.

The ceramics for decorative part of the present invention develops dark color tone with quietness and subduedness by combining zirconia and aluminum oxide, each having a white color, iron oxide having a red color or a black color depending on a degree of oxidation, and chromium oxide having a green color, and hafnium oxide, and thus it is possible to provide ceramics for decorative part, that allow users to feel dignified impression, high-grade impression and aesthetic satisfaction.

In the ceramics for decorative part of the present invention, it is preferable that the stabilizing agent is composed of a compound containing yttrium, such as yttrium oxide ($Y_2O_3$), and a content of the stabilizing agent composed of the compound containing yttrium is not less than 2.0 mol% nor more than 4.0 molt based on 100 mol% of zirconia containing the stabilizing agent ($ZrO_2$).

Thus, it is made possible to provide ceramics for decorative part, which are excellent in mechanical properties such as three-point bending strength and fracture toughness. When the content of the compound containing yttrium is less than 2.0 mol%, since zirconia cannot be sufficiently stabilized and the proportion of tetragonal crystal and cubic crystal, that are stable at room temperature, is small, it may be impossible to improve mechanical properties. In contrast, when the content of the compound containing yttrium is more than 4.0 mol%, an excess compound containing yttrium, that could not have been solid-soluted completely in zirconia, will become to exist in grain boundaries of zirconia, and thus it may be impossible to improve mechanical properties.

Examples of the compound containing yttrium include yttrium oxide ($Y_2O_3$), yttrium nitrate hexahydrate ($Y(NO_3)_3 \cdot 6H_2O$), yttrium chloride hexahydrate ($YCl_3 \cdot 6H_2O$) and yttrium acetate trihydrate ($Y(CH_3COO)_3 \cdot 3H_2O$). $YAlO_3$ (YAP), $Y_3Al_5O_{12}$ (YAG), $Y_4Al_5O_9$ (YAM) and the like that are compounds of yttrium (Y) and aluminum (Al) can be used.

The three-point bending strength of the ceramics for decorative part can be determined by measuring in accordance with JIS R 1601-1995.

In the ceramics for decorative part of the present invention, it is preferable that the stabilizing agent is composed of a compound containing cerium, such as cerium oxide ($CeO_2$) and a compound containing dysprosium, such as dysprosium oxide ($Dy_2O_3$), and the content of the compound containing cerium is not less than 4.0 mol% nor more than 8.0 mol% and that of the compound containing dysprosium is not less than 0.5 mol% nor more than 3.0 mol%, based on 100 mol% of zirconia containing the stabilizing agent ($ZrO_2$).

Thus, it is possible to provide ceramics for decorative part, that contain a small proportion of a monoclinic crystal among crystals of zirconia and also contain sufficiently stable zirconia as the main component. When a crystal of zirconia is heated, it undergoes a phase transition from a monoclinic crystal structure to a tetragonal crystal structure and then a cubic crystal structure while shrinking in volume. When the crystal of zirconia is cooled down, it undergoes a phase transition from the cubic crystal structure to the tetragonal crystal structure and then the monoclinic crystal structure while expanding in volume. Because of small proportion of the monoclinic crystal, the crystal causes less shrinkage or expansion in volume even when heat is applied, and thus it is possible to provide ceramics for decorative part, which is less likely to cause cracking or breakage and is excellent in heat resistance. Although the reason is not apparent, since deep color tone can be obtained by using a stabilizing agent composed of a compound containing cerium and a compound containing dysprosium, it is possible to provide ceramics for decorative part, that have color tone with quietness and subduedness.

When a content of the compound containing cerium is less than 4.0 mol% and when a content of the compound containing dysprosium is less than 0.5 mol%, zirconia cannot be sufficiently stabilized, and thus it may impossible to obtain satisfactory heat resistance. In contrast, when the content of the compound containing cerium is more than 8.0 mol% and the content of the compound containing dysprosium is more than 3.0 mol%, excess compound containing cerium and excess compound containing dysprosium, that could not have been solid-soluted completely in zirconia, exist in grain boundaries of zirconia, and thus mechanical properties may deteriorate.

As the compound containing cerium, cerium oxide ($CeO_2$), cerium acetate ($Ce(C_2H_3O_2)_3 \cdot nH_2O$), cerium hydroxide ($Ce(OH)_4 \cdot H_2O$), cerium chloride ($CeCl_3 \cdot nH_2O$), ceric sulfate ($Ce(SO_4)_2$) and the like can be used.

As the compound containing dysprosium, dysprosium oxide ($Dy_2O_3$), dysprosium carbonate ($Dy_2(CO_3)_3$), dysprosium chloride ($DyCl_3$), dysprosium fluoride ($DyF_3$), dysprosium nitrate ($Dy(NO_3)_3 \cdot 5H_2O$), dysprosium sulfate ($Dy_2(SO_4)_3 \cdot 8H_2O$) and the like can be used.

Regarding a proportion of a monoclinic crystal among crystals of zirconia, the proportion Xm of the monoclinic crystal can be calculated from the equation shown below using (111) and (11-1) reflection peak intensities of the monoclinic crystal and (111) reflection peak intensities of the tetragonal crystal and the cubic crystal measured by an X-ray diffraction method. (111) reflection intensity of the monoclinic crystal is denoted as Im(111), (11-1) reflection intensity of the monoclinic crystal is denoted as Im(11-1), and (111) reflection intensity of the tetragonal crystal and the cubic crystal are denoted as Itc(111).

$$Xm~(\%)~=~(Im(111)~+~(Im(11\text{-}1))/(Im(111)~+~(Im(11\text{-}1)~+~Itc(111))~\times~100$$

In the ceramics for decorative part of the present invention, the color tone can be varied according to the contents of iron oxide, chromium oxide and aluminum oxide. When the content of iron oxide is small, the color tone tends to become ivory color tone. In contrast, when the content of iron oxide is large, the color tone tends to become blackish color tone. When the content of chromium oxide is small, the color tone tends to become yellowish ocher color tone. In contrast, when the content of chromium oxide is large, the color tone tends to become light brownish color tone. When the content of iron oxide is small and the content of chromium oxide is large, the color tone tends to become greenish color tone.

Herein, in order to obtain one alternative of the ceramics for decorative part of the present invention, that have deep brown color tone, among deep color tone with quietness and subduedness that enables users to feel dignified impression, high-grade impression and aesthetic satisfaction, the content of iron oxide is not less than 0.5% by mass nor more than 5.0% by mass, the content of chromium oxide is not less than 0.1% by mass nor more than 1.0% by mass, and the content of aluminum oxide is not less than 0.3% by mass nor more than 2.0% by mass.

When the content of iron oxide is not less than 0.5% by mass nor more than 5.0% by mass, a change to ivory color tone or black color tone can be suppressed. When the content of chromium oxide is not less than 0.1% by mass nor more than 1.0% by mass, a change to yellowish ocher color or light brownish color tone can be suppressed. When the content of aluminum oxide is not less than 0.3% by mass nor more than 2.0% by mass, abnormal grain growth is scarcely generated, and thus a strength thereof is maintained, and also aluminum oxide reacts with chromium constituting chromium oxide to impart moderate brightness. Therefore, the ceramics for decorative part having deep brown color tone of the present invention can provide users with dignified impression, high-grade impression and aesthetic satisfaction through color tone with quietness and subduedness.

It is preferable that the ceramics for decorative part having a deep brown color of the present invention contains titanium oxide. Although the reason is not apparent, when the ceramics for decorative part having a deep brown color of the present invention contains titanium oxide, it is possible to decrease a difference in color tone between the surface and the inside of the ceramics for decorative part. The surface of the ceramics for decorative part means a surface subjected to surface processing such as barrel polishing after obtaining a sintered body, while the inside means a site located at a depth of 0.2 mm or more from the surface. As described above, since it is possible to decrease the difference in color tone between the surface and the inside of the ceramics for decorative part, scratches formed on the surface of the ceramics for decorative part are not conspicuous and it is possible to give users high aesthetic satisfaction over a long period.

It is preferable that a content of titanium oxide that can decrease the difference in color tone between the surface and the inside of the ceramics for decorative part is not less than 0.1% by mass nor more than 3.0% by mass based on 100% by mass of all components that constitute the ceramics for decorative part. When the content of titanium oxide is less than 0.1% by mass, there is less effect of decreasing the difference in color tone between the surface and the inside of the ceramics for decorative part. In contrast, when the content of titanium oxide is more than 3.0% by mass, since titanium oxide tends to cause blackening, dark color tone with quietness and subduedness may be impaired. Titanium oxide may be added during mixing of raw materials, or may be mixed with raw materials of zirconium oxide.

In order to obtain another alternative of the ceramics for decorative part of the present invention, that has deep green color tone, among deep color tone with quietness and subduedness that enables users to feel dignified impression, high-grade impression and aesthetic satisfaction, zirconia containing the stabilizing agent is used as the main component, the content of iron oxide is not less than 0.05% by mass and less than 0.5% by mass, the content of chromium oxide is not less than 0.5% by mass nor more than 3.0% by mass, and the content of aluminum oxide is not less than 0.05% by mass nor more than 0.8% by mass.

When the content of chromium oxide having a green color is not less than 0.5% by mass nor more than 3.0% by mass, and the content of iron oxide having a red color or a black color depending on a degree of oxidation is not less than 0.05% by mass and less than 0.5% by mass, it is possible to develop a deep green color tone with a green color brightness suppressed. When the content of aluminum oxide is not less than 0.05% by mass nor more than 0.8% by mass, since abnormal grain growth is scarcely generated, it is possible to maintain the strength thereof. As described above, the ceramics for decorative part of the present invention, that has the strength required to the decorative part and also has a deep green color, can provide users with dignified impression, high-grade impression and aesthetic satisfaction through color tone with quietness and subduedness.

The ceramics for decorative part of the present invention contain hafnium oxide. When the ceramics for decorative part of the present invention contain hafnium oxide, since the color tone becomes deep and dignified impression increased, and also high-grade impression increases, users can feel high aesthetic satisfaction.

The reason why an inclusion of hafnium oxide enables to be deep color tone is considered that hafnium oxide contained gives a subtle difference to a refractive index of light applied on the surface of the ceramics for decorative part of the present invention, or suppresses translucency. It is preferable that the content of hafnium oxide in the ceramics for decorative part of the present invention is not less than 0.5% by mass nor more than 3.0% by mass based on 100% by mass of all components that constitute the ceramics for decorative part. Hafnium oxide may be added during mixing of raw materials, or may be mixed with raw materials of zirconium oxide.

The contents of zirconia, and the respective oxides such as iron oxide, chromium oxide, aluminum oxide, titanium oxide and hafnium oxide as stabilizing agents can be obtained by determining the content of each element using fluorescent X-ray spectroscopy or inductively coupled plasma (ICP) emission spectrometry, and converting the content to that of oxide.

Color tone of the decorative surface of the ceramics for decorative part can be represented by a lightness index $L^*$ and chromaticness indices $a^*$ and $b^*$ in the CIE 1976 $L^*a^*b^*$ color space. The lightness index $L^*$ indicates a degree of lightness or darkness of color tone, while a higher value of the lightness index $L^*$ means lighter color tone and a lower value of the lightness index $L^*$ means darker color tone.

The chromaticness indices $a^*$ indicates a proportion of red and green in color tone. A larger positive value of chromaticness indices $a^*$ means red color, and a smaller absolute value of chromaticness indices $a^*$ means quiet color tone with reduced clearness, while a chromaticness indices $a^*$ having a larger negative value, means green color.

The chromaticness indices $b^*$ indicates a proportion of yellow and blue in color tone. A larger positive value of a chromaticness indices $b^*$ means yellow color tone, and a smaller absolute value of $b^*$ means quiet color tone with reduced clearness, while the chromaticness indices $b^*$ having a larger negative value means blue color.

The ceramics for decorative part having deep brown color tone of the present invention has a lightness index $L^*$ in a range of not less than 5 nor more than 20 in the $L^*a^*b^*$ color space of CIE1976 of the decorative surface, and both chromaticness indices $a^*$ and $b^*$ in a range of not less than 5 nor more than 15 in the $L^*a^*b^*$ color space of CIE1976 of the decorative surface. When the lightness index and chromaticness indices are in the above range, a deep brown color tone having sufficient dignified impression is exhibited as a result of excellent synergistic effect of the color tone. Therefore, users can feel quiet aesthetic appreciation.

The ceramics for decorative part having deep green color tone of the present invention has the lightness index $L^*$ in a range of not less than 25 nor more than 45 in the $L^*a^*b^*$ color space of CIE1976 of the decorative surface, the chromaticness indice $a^*$ in a range of not less than -8 nor more than 2 in the $L^*a^*b^*$ color space of CIE1976 of the decorative surface, and the chromaticness indice $b^*$ in a range of not less than 2 nor more than 20 in the $L^*a^*b^*$ color space of CIE1976 of the decorative surface. When the lightness index and chromaticness indices are in the above range, a deep green color tone having sufficient dignified impression is exhibited as a result of excellent synergistic effect of the color tone. Therefore, users can feel quiet aesthetic appreciation.

The decorative surface of the ceramics for decorative part of the present invention refers only to a surface of a decorative part which is required to have decorative value, and does not mean the entire surface since it is unnecessary to include the surface to which the decorative value is not required. For example, in case that the ceramics for decorative part of the present invention is used in a watch case, an outside surface of the watch case is subjected to aesthetic evaluation and is required to have decorative value, and is therefore referred to as the decorative surface, but an inner surface in which a drive mechanism of the watch is mounted thereon is not usually required to have decorative value, and thus is not the decorative surface.

The values of the lightness index $L^*$ and the chromaticness indices $a^*$ and $b^*$ in the $L^*a^*b^*$ color space of CIE1976 of the decorative surface can be measured in accordance with JIS Z 8722-2000. For example, a colorimeter (CR-221 or a new model thereof, manufactured by the former Minolta Co., Ltd.) may be used, using CIE standard light source of D65 as a light source, with a light receiving system being set under a((45-n)[45-0]), with a measurement area being set to 3 mm. When it is impossible to ensure sufficient measurement area, the measurement may be conducted by setting to the above conditions after polishing in an arbitrary position.

It is preferable that the ceramics for decorative part of the present invention have an apparent density of not less than 5.9 g/cm$^3$ nor more than 6.1 g/cm$^3$. As the apparent density increases, open voids of the decorative surface of the ceramics for decorative part decrease, and crystal grains are suppressed from dropping off from profiles of the open voids. In contrast, when the value of the apparent density decreases, mechanical properties deteriorate. In order to suppress crystal grains from dropping off without causing deterioration of mechanical properties, the apparent density is preferably not less than 5.9 g/cm$^3$ nor more than 6.1 g/cm$^3$. A value of the apparent density in the above range can be obtained by sintering at a sintering temperature in a range of not lower than 1,350°C nor higher than 1,550°C. This apparent density may be determined in accordance with JIS R 1634-1998.

It is preferable that the ceramics for decorative part of the present invention have a three-point bending strength as determined in accordance with JIS R 1601-1995 of not less than 900 MPa. This value is more than a bending strength 863 MPa of high strength glass "Crysterna®" which apply as a cover glass for watch is disclosed in Marubeni America Corporation Sunnyvale office homepage; [searched on February 20, 2008] internet <http://www.marubenisunnyvale.com/high_strengthened_glass.html>.

In the ceramics for decorative part of the present invention, an amount of the open voids in the decorative surface exerts an influence on a degree of lightness or darkness of color tone, namely, the value of the lightness index L*. When the amount of the open voids is large, the color tone of the surface becomes light as a result of an influence of variations in color due to profiles of open voids and thus the value of the lightness index L* tends to increases. Therefore, an occupied area ratio of open voids in the decorative surface is preferably not more than 0.2%, and more preferably not more than 0.1%.

The occupied area ratio of open voids in the decorative surface of the ceramics for decorative part of the present invention can be measured using a metallurgical microscope. Specifically, an image of the decorative surface of the ceramics for decorative part of the present invention taken by a CCD camera with a magnification of 200 times is captured. Using an image analysis equipment (LUZEX-FS or a new model thereof, manufactured by Nireco Corporation), the total area of open voids of 20 visual fields was calculated with the measurement area of one visual field in this image being set to $2.25 \times 10^{-2}$ mm$^2$, with the measurement field number being set to 20, and then divided by the entire measurement area observed being set to $4.5 \times 10^{-1}$ mm$^2$, thus making it possible to determine the occupied area ratio of open voids.

In the decorative surface of the ceramics for decorative part of the present invention, a size of an aperture diameter of open voids exerts an influence on variations in color. Therefore, a maximum aperture diameter of open voids is preferably not more than 50 μm. The maximum aperture diameter of open voids can be measured using a metallurgical microscope. Specifically, under a magnification of 100 times, 5 points (an area per one point was set to area measuring 1,235 μm × 926 μm) are extracted from the decorative surface of the ceramics for decorative part, and the diameter of the largest open void is measured, thus making it possible to obtain the maximum aperture diameter.

The higher the luster of the ceramics for decorative part of the present invention, the more the high-grade impression increases. Therefore, the smaller the surface roughness, the ceramics become better. It is preferably to set an arithmetic mean height (Ra) of the decorative surface to not more than 0.03 μm. This arithmetic mean height (Ra) may be measured in accordance with JIS B 0601-2001. For example, in the case of disk-shaped ceramics for decorative part having a diameter of 10 to 20 mm, the arithmetic mean height (Ra) is measured by the following. The measurement length and the cut-off point are set to 5 mm and 0.8 mm, respectively. Using a contact probe type surface roughness meter, a stylus having a tip radius of 2 μm may be put into contact with the decorative surface of the ceramics for decorative part, and scanned at a speed of 0.5 mm/sec. The arithmetic mean height (Ra) of the decorative surface is the average of values measured at 5 points.

The ceramics for decorative part of the present invention can sometimes contain, as an inevitable impurity, allergic metals such as mercury (Hg), nickel (Ni), tin (Sn), zinc (Zn) and palladium (Pd). Each content of the allergic metals contained as the inevitable impurity is preferably not more than 0.1% by mass based on 100% by mass of the ceramics for decorative part. The content of these allergic metals can be calculated by a semi-quantitative analysis of elements performed by a FP method using an X-ray fluorescence analyzer, or ICP emission spectrometry.

The ceramics for decorative part of the present invention can sometimes contain, as an inevitable impurity, oxides that tend to cause whitening, such as silicon dioxide (SiO$_2$) and sodium oxide (Na$_2$O). It is preferable that each content of silicon dioxide and sodium oxide contained as the inevitable impurity is not more than 0.5% by mass based on 100% by mass of the ceramics for decorative part, and additionally the total content thereof is not more than 0.5% by mass.

It is preferable that the ceramics for decorative part of the present invention do not substantially contain oxides having a strong tendency to cause blackening, such as cobalt oxide (CoO), manganese oxide (MnO$_2$), vanadium oxide (V$_2$O$_5$), tin oxide (SnO$_2$) and silver oxide (Ag$_2$O), and each content is preferably not more than 0.1% by mass based on 100% by mass of the ceramics for decorative part. The contents of these oxides can be calculated by the semi-quantitative analysis of elements using an X-ray fluorescence analyzer by a FP method, or by converting the content of each element determined by using an ICP emission spectrometry to that of oxide.

The decorative part for watch of the present invention is characterized by comprising the ceramics for decorative part of the present invention with the above constitution, and specific examples thereof include watch case and links of watch band.

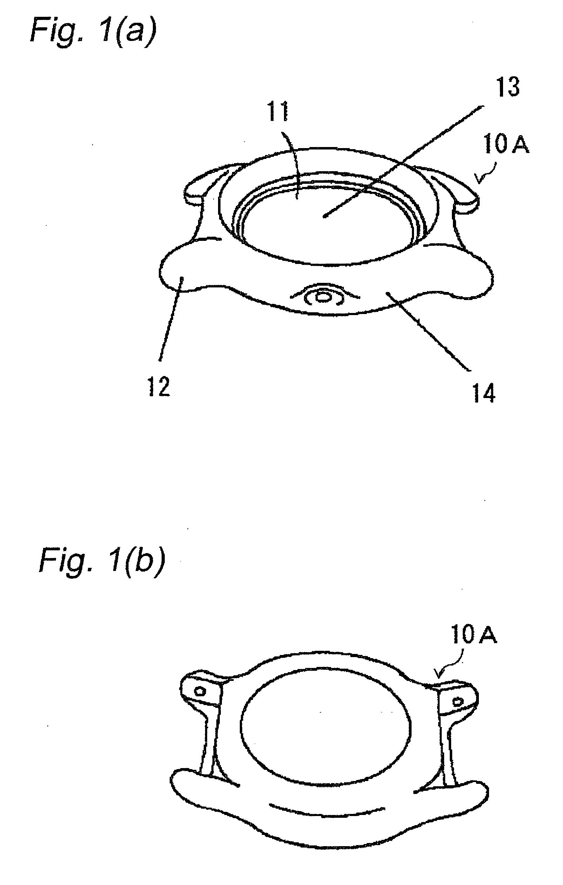

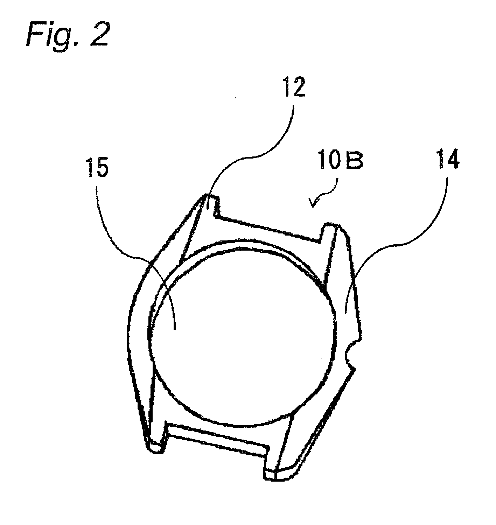

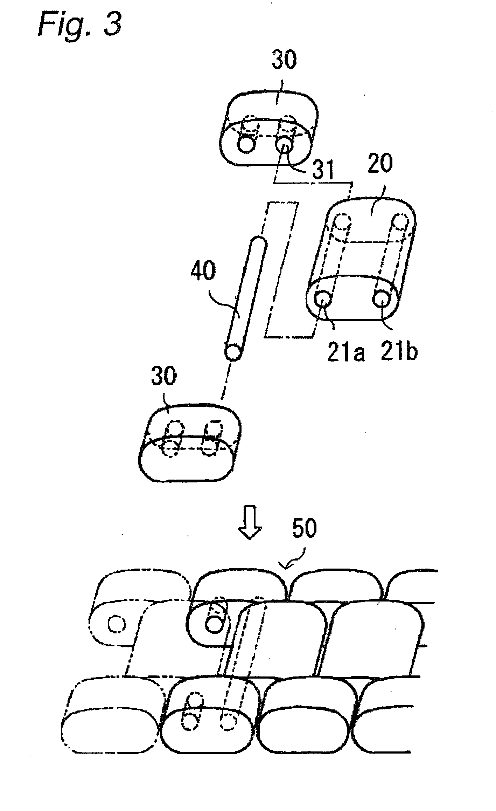

Fig. 1 shows an example of a watch case that is a decorative part for watch of the present invention, Fig. 1(a) is a perspective view of the watch case as seen from the front surface, and Fig. 1(b) is a perspective view of the watch case of Fig. 1(a) as seen from the back surface. Fig. 2 is a perspective view showing another example of a watch case that is a decorative part for watch of the present invention. Fig. 3 is a schematic view showing an example of constitution of a watch band that is a decorative part for watch of the present invention. Identical members are denoted with the same reference numeral in these drawings.

The watch case 10A shown in Fig. 1 has a recess 11 that houses a movement (drive mechanism) (not shown), and legs 12 which engage a watch band (not shown) for wearing the watch on a wrist, wherein the recess 11 is constituted from a thin bottom 13 and a thick case body 14. The watch case 10B shown in Fig. 2 has a hole 15 which accommodates the movement (drive mechanism) (not shown), and legs 12 provided on the case body 14 for engaging a watch band (not shown) so as to wear the watch on a wrist.

The links that constitute the watch band 50 shown in Fig. 3 include inner links 20 each having a through hole 21 into which a pin 40 is inserted and outer links 30 which are disposed to sandwich the inner link 20 and each having pin holes 31 in which the ends of the pin 40 are inserted. The inner link 20 and the outer links 30 are linked with each other by inserting the pin 40 into the through hole 21 of the inner link 20, and engaging both ends of the inserted pin 40 in the pin holes 31 of the outer links 30, thereby to assemble the watch band 50.

The decorative parts for watch of the present invention that include the watch cases 10A, 10B and the links that constitute the watch band 50 are formed from the ceramics for decorative part of the present invention, and therefore the obtained watch has dignified impression and high-grade impression because of deep color tone with quietness and subduedness, thus making it possible to provide users with sufficient aesthetic satisfaction and mind soothing effect through a visual sense.

In the ceramics for decorative part of the present invention, Vickers hardness (Hv) of the decorative surface is one of factors that exert an influence on long-term reliability, and thus the Vickers hardness (Hv) is preferably not less than 8 GPa. When the Vickers hardness (Hv) is set in the above range, scratches become less likely to be formed on the decorative surface. Therefore, even when the decorative surface is contacted with substances having high hardness, such as dusts composed of glass or metal, scratches are not easily formed on the decorative surface. The Vickers hardness (Hv) of the decorative surface can be measured in accordance with JIS R 1610-2003.

The fracture toughness exerts an influence on a wear resistance of the decorative surface. The higher the value, the more it becomes better. In the ceramics for decorative part of the present invention, the fracture toughness is preferably not less than 4 MPa·m$^{1/2}$. The fracture toughness can be measured in accordance with an indentation-fracture method (IF method) specified in JIS R 1607-1995.

In case that the ceramics for decorative part are used with them worn on, users tend toprefer a light-weight one. Therefore, in the ceramics for decorative part of the present invention, the apparent density is preferably not more than 6 g/cm$^3$ (excluding 0 g/cm$^3$).

Since a tensile load is frequently applied to the inner links 20 as a portion of watch band links, a tensile strength of the ceramics for decorative part of the present invention is preferably not less than 196 N. In order to determine the tensile strength, after inserting a pin (not shown) made of cemented carbide that is longer than a length of a through hole 21 into the through holes 21a, 21b of the inner links 20 and then pulling the pin along a separation direction, a strength upon a breakage of the inner links 20 may be read by a load cell.

In case that the watch case or the watch band links are formed of the ceramics for decorative part of the present invention, with an adverse influence on the movement (drive mechanism) (not shown) being taken into consideration, a content of ferromagnetic metal having mass magnetization of not less than 162 G·cm$^3$/g, for example, cobalt (Co) is preferably not more than 0.1% by mass in total based on 100% by mass of the ceramics for decorative part. The content of the ferromagnetic metal can be measured by TCP emission spectrometry.

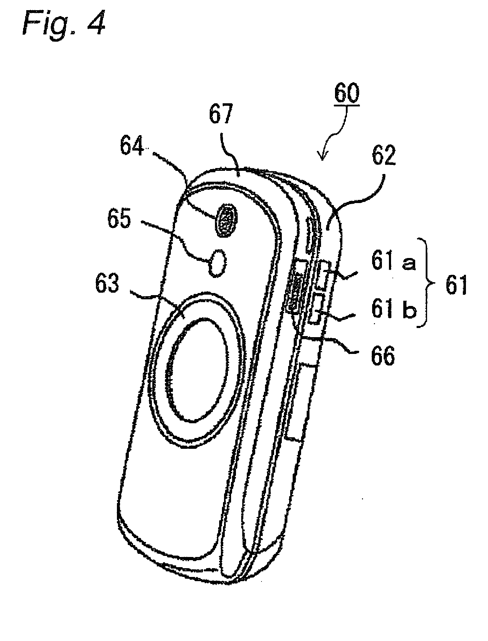

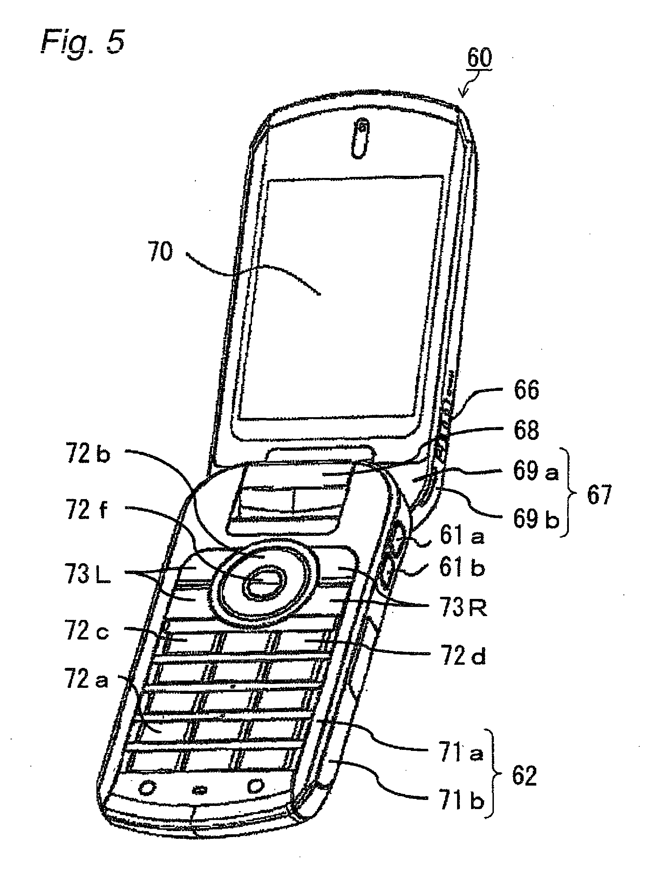

Next, Fig. 4 is a perspective view showing an example of a mobile phone that uses a decorative part for mobile terminal of the present invention. Fig. 5 is a perspective view showing the mobile phone of the example shown in Fig. 4 in a state of chassis opened.

The decorative parts for mobile terminal of the present invention are composed of the ceramics for decorative part of the present invention, and specific examples thereof include control keys and case or the like shown in Fig. 5.

The mobile phone 60 shown in Fig. 4 has a mode key 61 comprising a mode key 61a for changing an operation mode of the mobile phone 60 between radio mode for listening to radio broadcast, music mode for listening to music and the like, and a silencer key 61b for putting the mobile phone 60 into a silent mode, both keys being provided on a first chassis 62, and further has a touch sensor 63 for detecting a contact of a finger thereon and entering commands by the contact, a camera 64 for capturing an image, a light 65 and a slide switch 66 for setting whether or not an entry through the touch sensor 63 can be activated, the touch sensor 63, the camera 64, the light 65 and the slide switch 66 being provided on a second chassis 67.

The mobile phone 60 as shown in Fig. 5 shows that it is in a state where the second chassis 67 is opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also has a front case 71a and a rear case 71b, while various control keys are provided on the front case 71a. The control keys include numeral keys 72a for entering telephone numbers and the like, cursor moving keys 72b for moving a cursor over a menu of various functions, a talk key 72c to be pressed to start talking when receiving a call, a power/hang up key 72d for turning a power on or off and hanging up a line to end talking, function keys 73L, 73R, etc. disposed on the left and right sides of a center key 72f which is disposed at the center of the cursor moving key 72b.

When at least one kind of the above cases, such as the front cases 69a and 71a and the rear cases 69b and 71b, and operation keys, such as the numeral keys 72a, the cursor moving keys 72b, the talk key 72c, the power/hang up key 72d, the center key 72f, the function keys 73L, 73R, etc. is formed from the ceramics for decorative part of the present invention, the obtained watch 60 has dignified impression and high-grade impression because of deep color tone with quietness and subduedness, thus making it possible to provide users with aesthetic satisfaction and mind soothing effect over a long period of time, while allowing the user to have satisfying feeling of owning the mobile phone 60 of such color tone. Also because the ceramics for decorative part of the present invention has favorable property for color coordination, it is capable of satisfying a diversity of preference by users by combining with members of various color tones.

While the mobile phone 60 has been described as an example of mobile terminals, the mobile terminal using the decorative part of the present invention, is not limited to the mobile phone 60. The present invention can also be applied to various portable terminals whose parts are required to have decorative value, such as portable information terminal (PDA), portable navigation system and portable audio player.

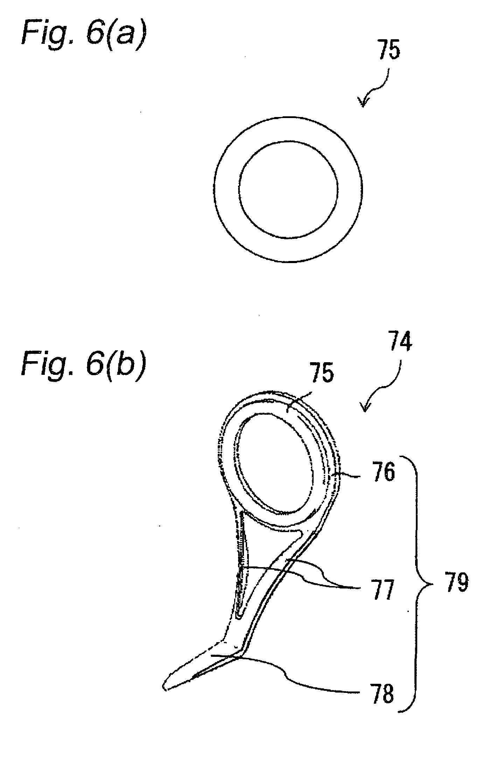

Next, Fig. 6 shows a fish line guide ring that is a decorative part for fish line guide of the present invention, and an example of a fish line guide provided with the fish line guide ring, Fig. 6(a) is a plan view of the fish line guide ring, and Fig. 6(b) is a perspective view of a fish line guide having the fish line guide ring shown in Fig. 6(a).

The fish line guide ring 75 shown in Fig. 6 is used to guide a fish line (not shown) inserted through the inside thereof. The fish line guide 74 comprises a holding section 76 that holds the fish line guide ring 75, and there is provided the fish line guide ring 75 on a frame 79 made by integrally forming a support 77 of the holding section 76 and a mount 78 fastened onto a fishing rod (not shown). When the fish line guide ring 75 is formed of the ceramics for decorative part of the present invention, the fish line guide ring 75 having deep color tone has favorable property for color coordination with the fish line guide 74 and the fishing rod, and has sufficient dignified impression because of deep color tone with quietness and subduedness, and therefore the fish line guide ring can be preferably used for a fishing tackle. The fish line guide ring 75 may be coated on a surface thereof with a transparent film having high wear resistance such as hard amorphous carbon thereby further improving the wear resistance.

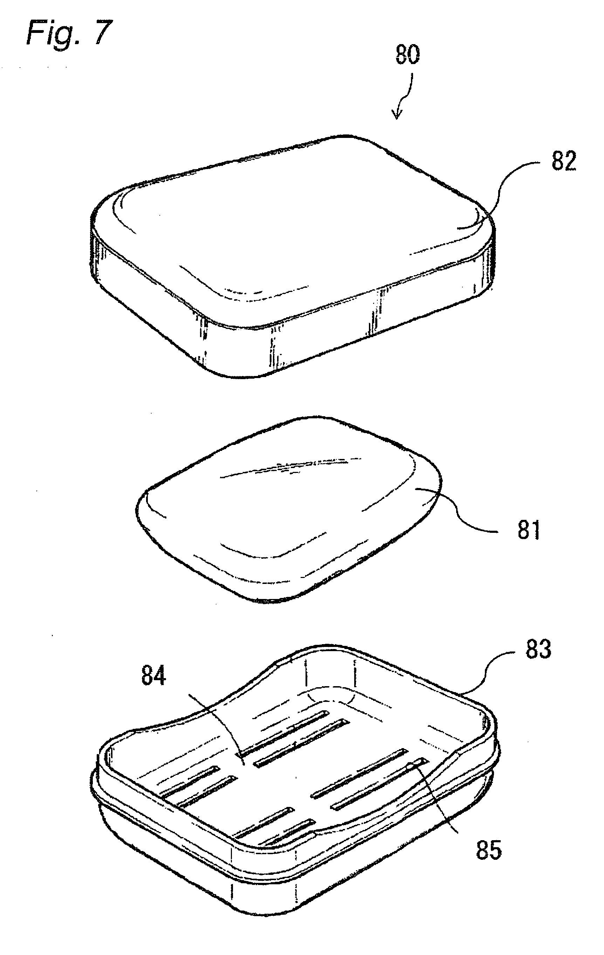

Next, Fig. 7 is a schematic view showing an example of constitution of a soap case as an application of a decorative part for daily life articles of the present invention. The soap case 80 shown in Fig. 7 is composed of a case body 83 and a cap 82, in which a placing surface 84 of the case body 83 for placing a piece of soap 81 has draining slits 85 for draining water attached to a surface of the soap 81. When the soap 81 is not used, the soap 81 is placed on the placing surface 84 of the case body 83, and is accommodated by putting the cap 82 onto the case body 83. When the soap 81 is used, the cap 82 is removed from the case body 83 and the soap 81 is taken out to use it. By placing the soap 81 on the placing surface 84 of the body 83 after use, water attached to a surface of the soap 81 can be drained through the drain slits 85 thereby preventing the soap 81 from being soaked with water.

By forming the cap 82 or the case body 83 constituting the soap case 80 from the ceramics for decorative part of the present invention, it is made possible to provide many users with a joy from possessing it and to give high-grade impression, aesthetic satisfaction and mind soothing effect through the visual sense during use.

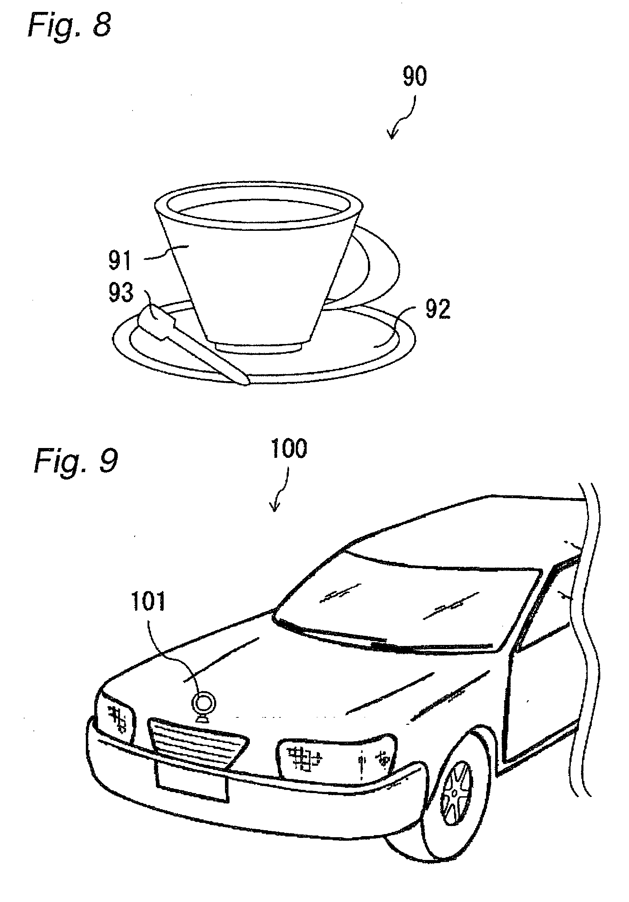

Next, Fig. 8 is a perspective view showing an example of a coffee cup set that is a decorative part for daily life articles of the present invention.

The coffee cup set 90 shown in Fig. 8 comprises a coffee cup 91, a saucer 92 and a spoon 93. By forming the coffee cup 91, the saucer 92 and the spoon 93 from the ceramics for decorative part of the present invention, it is made possible to provide many users with the joy from possessing it and to give high-grade impression, aesthetic satisfaction and mind soothing effect through the visual sense during use.

Since the ceramics for decorative part of the present invention has favorable property for color coordination, at least one of the coffee cup 91, the saucer 92 and the spoon 93 may be formed from the ceramics for decorative part of the present invention while combining with another members having different color tones.

Applications of the decorative part for daily life articles of the present invention are not limited to the soap case 80 and the coffee cup set 90, and can also be applied to a handle of tooth brush or shaver, earpick, scissors and another decorative part for daily life articles. By furnishing the bath rooms and the toilet rooms of a luxury hotel with toiletry goods formed from the ceramics for decorative part of the present invention and marked with logos or the like, it is made possible to provide high-grade impression, aesthetic satisfaction and mind soothing effect, spiced with excitement of being cut off from everyday lives.

Fig. 9 is a perspective view showing an example of a vehicle body having a decorative part for vehicle supplies of the present invention mounted thereon.

The vehicle body 100 shown in Fig. 9 has an emblem 101 which is an example of the decorative part for vehicle supplies. By forming the emblem 101 from the ceramics for decorative part of the present invention, it is made possible to provide the user with high-grade impression, aesthetic satisfaction and mind soothing effect through visual sense, and thus the decorative value of the vehicle body 100 can be improved. While Fig. 9 shows the emblem 101 that is mounted on a front of the vehicle body 100, decorative value of the vehicle body 100 can be improved also by attaching the emblem 101 formed from the ceramics for decorative part of the present invention that shows the manufacturer's name or the model name, on a rear of the vehicle body 100.

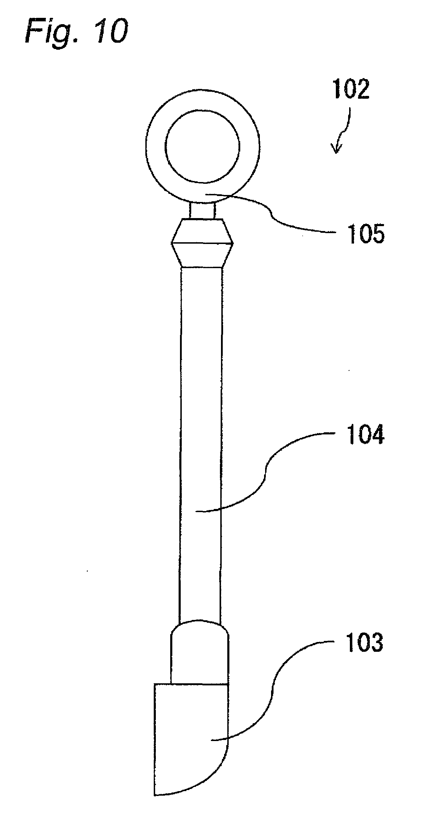

Fig. 10 is a front view showing an example of a corner pole that uses a decorative part for vehicle supplies of the present invention.

The corner pole 102 shown in Fig. 10 is installed so as to mark a left front corner of the vehicle, in case of a right-hand drive vehicle, which is difficult to see from the driver seat when moving in or out of a parking lot, and comprises a mount 103 to be fastened onto the vehicle body, a pole 104 and a lighting unit 105 consisting of LED or the like. It is advantageous to form the pole 104 of the corner pole 102 from the ceramics for decorative part of the present invention, or mounting the emblem formed from the ceramics for decorative part of the present invention instead of the lighting unit 105, so as to improve decorative value of the vehicle body as well as that of the corner pole 102.

In addition to the emblem 101 and the corner pole 102, the decorative part for vehicle supplies of the present invention may be applied to a part of wheel cap, a part of hood ornament mounted on a bonnet of the vehicle body, small articles and accessories installed in a passenger room of the vehicle or a part thereof, thus improving the decorative value. Therefore, the decorative part for vehicle supplies are preferable.

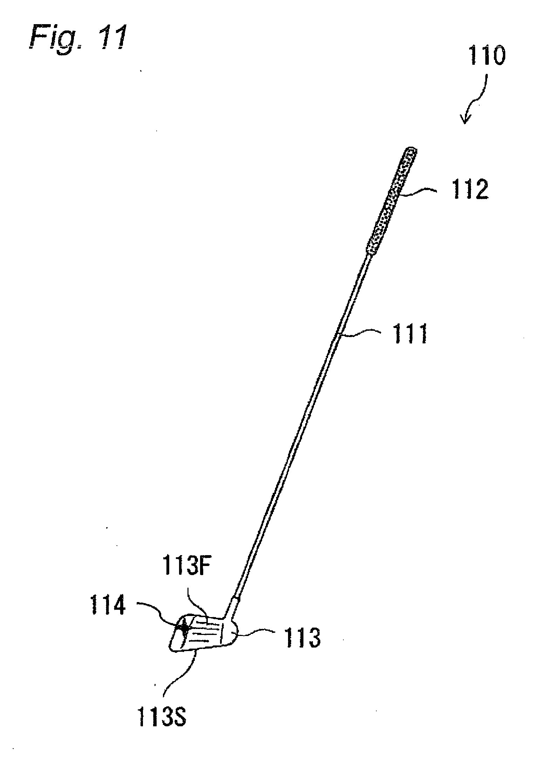

Next, Fig. 11 is a front view showing an example of a golf club that uses a decorative part for sports goods of the present invention.

The golf club 110 shown in Fig. 11 has a shaft 111, a grip 112 attached to one end of the shaft 111 and a head 113 attached to another end of the shaft 111. The head 113 has an impact face 113F that hits a golf ball, and a sole surface 113S that touches the ground. It is preferable to embed an accessory 114 formed from the ceramics for decorative part of the present invention in the impact face 113F, as shown in Fig. 11, to improve the decorative value.

In addition to the impact face 113F, the accessory 114 formed from the ceramics for decorative part of the present invention may also be preferably embedded in the sole surface 113S or the grip 112.

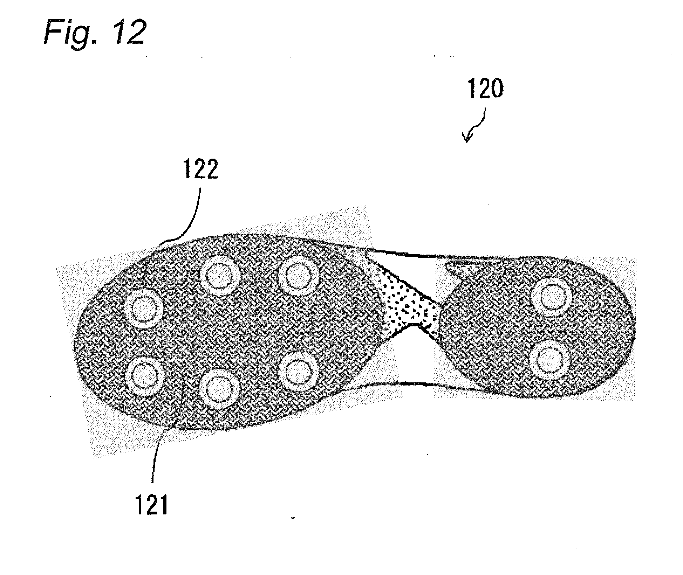

Fig. 12 is a bottom view showing an example of spike shoes that use a decorative part for sports goods of the present invention.

The spike shoes 120 shown in Fig. 12 are worn in, for example, soccer or rugby, and has a plurality of studs 122 planted in a sole 121 to protrude therefrom so as to stabilize a pivot foot when kicking a ball. Forming the studs 122 from the ceramics for decorative part of the present invention improves the decorative value of the spike shoes 120. Moreover, since it has higher wear resistance than that of conventional studs made of aluminum alloy, it is made possible to decrease a frequency of replacement of the studs 122, and thereby reducing the cost incurred from the replacement. The studs 122 may be covered by a transparent resin to prevent the studs 122 from being chipped during a game.

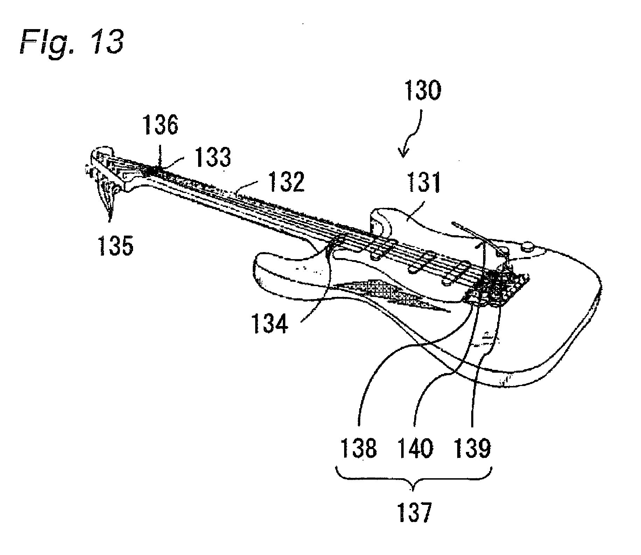

Next, Fig. 13 is a perspective view showing an example of a guitar that uses a decorative part for musical instrument of the present invention.

The guitar 130 shown in Fig. 13 consists mainly of a body 131 and a neck 132 that extends from the body 131. Disposed near a distal end of the neck 132 is a nut 133, and a tuning peg 135 is provided beyond the nut 133 for each of strings 134 for adjusting a tension of the string 134. A clamp mechanism 136 is provided near the nut 133, the clamp mechanism 136 holding the strings 134 so that the strings 134 do not move with respect to the nut 133.

The body 131 has a tremolo 137 for producing sound effect by increasing or decreasing the tensions of the strings 134 at the same time. The tremolo 137 comprises a base plate 138 that is attached to the body 131, a bridge saddle 139 that is held on the base plate 138 and holds the strings 134 in tunable state, and a tremolo bar 140 that actuates the tremolo. By forming one or more of constituent elements of the guitar 130, such as the base plate 138, the bridge saddle 139 and the tremolo bar 140 of the guitar 130 from the ceramics for decorative part of the present invention, it is made possible to improve the decorative value of the guitar 130. This provides the joy from possessing the guitar 130 and helps to captivate a large audience.

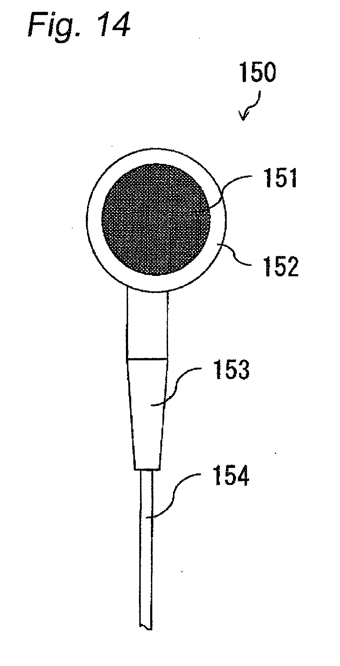

Next, Fig. 14 is a front view showing an example of an earphone unit that uses a decorative part for accessory of the present invention.

The earphone unit 150 shown in Fig. 14 comprises a speaker 151 that is inserted into an ear of the listener to produce sound waves, a case 152 that houses the speaker 151, and a cord 154 that feeds electric signals to the speaker 151 via a lead 153 that is in contact with the case 152.

By forming the case 152 of the earphone unit 150 from the ceramics for decorative part of the present invention, it is made possible to provide the decorative part for accessory that improves the decorative value, and provides many users with high-grade impression, aesthetic satisfaction and mind soothing effect through the visual sense.

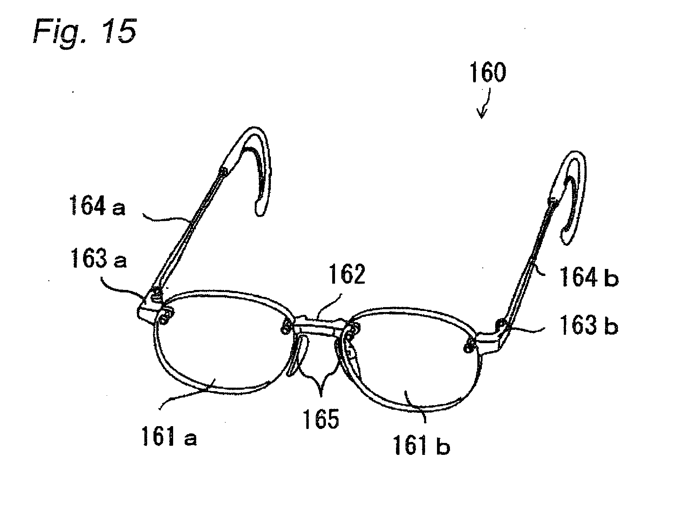

Fig. 15 is a perspective view showing an example of an eyeglass frame that uses a decorative part for accessory of the present invention.

The eyeglasses 160 shown in Fig. 15 comprise a pair of lenses 161a, 161b that provides vision correction or protection of eyes against ultraviolet rays, a bridge 162 that links the pair of lenses 161a, 161b together, armor parts 163a, 163b that connect to the respective lenses 161a, 161b, temples 164a, 164b that connect to the armor parts 163a, 163b so as to be capable of rotating about a hinge, and a nose pad 165 attached via nose pad link members to the lenses 161a, 161b, respectively.

By forming at least one of the bridge 162, the temples 164a, 164b and the nose pad 165 of the eyeglasses 160 from the ceramics for decorative part of the present invention, it is made possible to provide the decorative part for accessory that improves the decorative value, and provides many users with high-grade impression, aesthetic satisfaction and mind soothing effect through the visual sense.

A reference example of producing the ceramics for decorative part of the present invention will be described below.

In order to obtain reference ceramics for decorative part, first, weighing is conducted so that a content of a powder of iron oxide ($Fe_2O_3$) falls within a range from 0.02 to 6.0% by mass, a content of a powder of chromium oxide ($Cr_2O_3$) falls within a range from 0.05 to 4.0% by mass, a content of a powder of aluminum oxide ($Al_2O_3$) falls within a range from 0.02 to 3.0% by mass, and balance is a powder of zirconia ($ZrO_2$). The powder of zirconia may be a mixed powder comprising 85.0 to 99.0 mol% of a powder of zirconia, and 1.0 to 15.0 mol% of a powder of at least one kind selected from the group of yttrium oxide ($Y_2O_3$), cerium oxide ($CeO_2$), dysprosium oxide ($Dy_2O_3$), magnesium oxide (MgO), neodymium oxide ($Nd_2O_3$) and calcium oxide (CaO) as stabilizing agents, or a powder of zirconia produced by adding a stabilizing agent using a coprecipitation method. The respective powders thus weighed and water as a solvent are charged in a vibrating mill or a ball mill or the like, followed by mixing and grinding.

In order to obtain a sintered body having deep brown color tone in which the content of iron oxide is not less than 0.5% by mass nor more than 5.0% by mass, the content of chromium oxide is not less than 0.1% by mass nor more than 1.0% by mass, and the content of aluminum oxide is not less than 0.3% by mass nor more than 2.0% by mass, weighing is conducted so that the content of a powder of iron oxide falls within a range of not less than 0.5% by mass nor more than 5.0% by mass, the content of a powder of chromium oxide falls within a range of not less than 0.1% by mass nor more than 1.0% by mass, the content of a powder of aluminum oxide falls within a range of not less than 0.3% by mass nor more than 2.0% by mass, and balance is a powder of zirconia containing a stabilizing agent, and these powders are used.

In order to obtain a sintered body having deep green color tone in which the content of iron oxide is not less than 0.05% by mass and less than 0.5% by mass, the content of chromium oxide is not less than 0.5% by mass nor more than 3.0% by mass and the content of aluminum oxide is not less than 0.05% by mass nor more than 0.8% by mass, weighing is conducted so that the content of a powder of iron oxide falls within a range of not less than 0.05% by mass and less than 0.5% by mass, the content of a powder of chromium oxide falls within a range of 0.5 to 3.0% by mass or less, the content of a powder of aluminum oxide falls within a range of not less than 0.05% by mass nor more than 0.8% by mass, and balance is a powder of zirconia containing a stabilizing agent, and these powders are used.

In order to obtain the ceramics of the present invention in addition to the respective powders of iron oxide, chromium oxide and aluminum oxide, powder of hafnium oxide, and preferably 0.5 to 3.0% by mass of hafnium oxide ($HfO_2$) powder is added. Also, a zirconia powder containing hafnium oxide can be used.

Balls used in mixing and grinding may exert an influence on a color tone of the ceramics for decorative part of the present invention. Therefore, it is preferable to use balls having the same or similar composition in which the values of the lightness index L* and the chromaticness indices a* and b* in the L*a*b* color space of CIE1976 of the ball surface exhibit approximate values.

Next, a predetermined amount of paraffin wax as a binder is added to a slurry obtained by mixing and grinding, and the mixture is dried by a spray drying method to obtain granules. The obtained granules are formed into a desired shape such as a disk, a flat plate, a columnar body, a circular ring or the like by a desired molding method, for example, a dry pressure molding method, a cold isostatic pressure molding method or the like. If a product has a complicated shape, a molding may be obtained by a cast molding method or an injection molding method using a slurry prepared by adding a solvent, a binder or the like to the slurry obtained by mixing and grinding. It is also possible to obtain a molding by forming into a block shape or a shape close to a shape of the product by various molding methods, followed by cutting. The obtained molding is optionally degreased and fired in an air atmosphere to obtain a sintered body.

At this time, when a sintering temperature is low, a degree of sintering is not sufficient. In contrast, when the sintering temperature is high, crystals of the sintered body causes abnormal grain growth, and thus mechanical properties deteriorate. Therefore, it is preferable to sinter the ceramics for decorative part of the present invention at a temperature of not lower than 1,350°C nor higher than 1,500°C. By controlling the sintering temperature in a range of not lower than 1350°C nor higher than 1,550°C, the ceramics are sufficiently sintered to attain the apparent density of the ceramics for decorative part in a range of not less than 5.9 g/cm$^3$ nor more than 6.1 g/cm$^3$, thus making it possible to obtain ceramics for decorative part with excellent mechanical properties.

As a result of barrel polishing of the obtained sintered body, it is possible to obtain ceramics for decorative part of the present invention in which a surface of the sintered body would be turned into a decorative surface having color tone, that can provide users with high-grade impression, aesthetic satisfaction and mind soothing effect. Barrel polishing may be conducted for about 24 hours by a wet type centrifugal barrel polisher using media and green carborundum (GC). The sintered body may be optionally subjected to grinding so as to impart a shape of the product prior to a barrel polishing. It is also possible to conduct a lapping operation by feeding a diamond paste having a small mean particle size of not more than 1 μm to a lapping machine made of tin.

When a dry pressure molding method is selected as the molding method, a molding pressure exerts an influence on an occupied area ratio of open voids in the surface, a maximum aperture diameter of open voids, and Vickers hardness (Hv). When the molding pressure increases, it is possible to decrease the occupied area ratio and the maximum aperture diameter of open voids and to increase Vickers hardness (Hv). In order to obtain the ceramics for decorative part of the present invention, the molding pressure is preferably controlled to not less than 49 MPa nor more than 196 MPa. When the molding pressure is controlled in the above range, it is possible to control the occupied area ratio of open voids in the surface of the ceramics for decorative part of the present invention to not more than 0.2% and to control Vickers hardness (Hv) to not less than 8 GPa, and to elongate a service life of the molding die. In particular, the molding pressure having not less than 96 MPa nor more than 196 MPa is more preferable because the maximum aperture diameter of open voids in the surface can be controlled to not more than 50 μm.

The ceramics for decorative part of the present invention as obtained by conducting as described above have sufficient dignified impression and can achieve high-grade impression and aesthetic satisfaction, and, as a result, mind soothing effect can be obtained though the visual sense. Therefore, as described above, the ceramics for decorative part of the present invention can be preferably used in a decorative part for watch, such as watch case or watch band links; a decorative part for mobile terminal, such as various keys that is operated by pushing, and case; a decorative part for fish line guide, such as a fish line guide ring; a decorative part for daily life articles, such as a soap case or a coffee cup set; a decorative part for vehicle supplies, such as an emblem of a manufacturer or a model name, or a corner pole; a decorative part for sports goods, such as an accessory of a golf club, or studs of spiked shoes; a decorative part for musical instrument, such as a base plate of a guitar; and a decorative part for accessory, such as a case of an earphone unit, or a bridge of eyeglasses.

In addition, the ceramics for decorative part can be preferably used in a decorative part for accessory, such as broach, necklace, earring, ring, bracelet, anklet, tiepin, tie tack, medal, button, knife, fork, handle of tooth brush or shaver, earpick, scissors, materials for seals, and business card; a decorative part for building materials, such as tiles for decorating floor, wall or ceiling, knob of door; and another decorative parts for household appliances. If decorativeness is required to the parts, white color ceramics of the present invention can also be preferably used in a wristwatch type mobile phone having both a function of a watch and a function of a mobile phone as a result of complexation thereof.

Reference Example 1

Examples of the present invention and Reference Examples will be specifically described, but the present invention is not limited thereby.

First, in order to confirm three-point bending strength and to evaluate heat resistance in the case of using, as a stabilizing agent, a compound containing yttrium such as yttrium oxide ($Y_2O_3$), or using, as a stabilizing agent, a compound containing cerium, such as cerium oxide ($CeO_2$) and a compound containing dysprosium, such as dysprosium oxide ($Dy_2O_3$), the proportion of a cubic crystal and a tetragonal crystal, and the proportion of a monoclinic crystal were confirmed.

First, a zirconia ($ZrO_2$) powder and each stabilizing agent shown in Table 1 were mixed in the total proportion of 100 mol%. After weighing so that the content of iron oxide (FeO) becomes 3.0% by mass, the content of chromium oxide ($Cr_2O_3$) becomes 0.1% by mass, and the content of aluminum oxide ($Al_2O_3$) becomes 0.3% by mass, based on 100 parts by mass of a mixed powder, these materials were charged in a vibrating mill, together with water as a solvent, followed by mixing and grinding.

Next, a predetermined amount of paraffin wax as a binder was added to the slurry obtained by mixing and grinding, and the mixture was dried by a spray drying method to obtain granules. For each specimen, a plurality of moldings that would be turned into the inner links 20 of band links shown in Fig. 3 were made under a pressure of 98 MPa by a dry pressure molding method, and the obtain moldings were sintered at 1,450°C to obtain sintered bodies. The obtained sintered bodies were put into a centrifugal barrel polisher using media and green carborundom (GC), and then subjected to wet type barrel polishing for 24 hours to obtain specimens Nos. 1 to 18 of the reference ceramics for decorative part.

Then, the three-point bending strength was measured in accordance with JIS R 1601-1995. Using a heating apparatus such as a heater, the respective specimens were dried at a temperature of 150°C for 100 hours, and then reflection peak intensities of the respective specimens were measured by an X-ray diffraction method. Then, (111) and (11-1) reflection peak intensities of a monoclinic crystal are respectively denoted as Im(111) and Im(11-1), respectively, and (111) reflection peak intensities of a tetragonal crystal and a cubic crystal (111) are denoted as Itc(111). The proportion of the monoclinic crystal was determined by the following equation.

$$Xm\ (\%)\ =\ (Im(111)\ +\ (Im(11\text{-}1))/(Im(111)\ +\ (Im(11\text{-}1)\ +$$

$$Itc(111))\ \times\ 100$$

The proportion of the cubic crystal and the tetragonal crystal were determined by subtracting the proportion of the monoclinic crystal from 100. The results are shown in Table 1.

Table 1

| Specimen No. | Yttrium oxide (mol%) | Cerium oxide (mol%) | Dysprosium oxide (mol%) | Three-pint bending strength (MPa) | Proportion of monoclinic crystal (%) | Proportion of cubic crystal and tetragonal crystal |
|---|---|---|---|---|---|---|
| 1 | 1.5 | - | - | 880 | 20 | 80 |
| 2 | 2.0 | - | - | 930 | 18 | 82 |
| 3 | 3.0 | - | - | 990 | 1.0 | 90 |
| 4 | 4.0 | - | - | 970 | 8 | 92 |
| 5 | 4.5 | - | - | 890 | 7 | 93 |
| 6 | - | 6.0 | 0.4 | 630 | 2 | 98 |
| 7 | - | 6.0 | 0.5 | 680 | 0 | 100 |
| 8 | - | 6.0 | 1.5 | 700 | 0 | 100 |
| 9 | - | 6.0 | 3.0 | 650 | 0 | 100 |
| 10 | - | 6.0 | 3.5 | 590 | 0 | 100 |
| 11 | - | 3.5 | 1.5 | 640 | 3 | 97 |
| 12 | - | 4.0 | 1.5 | 660 | 0 | 100 |
| 13 | - | 8.0 | 1.5 | 600 | 0 | 100 |
| 14 | - | 8.5 | 1.5 | 550 | 0 | 100 |
| 15 | - | 3.5 | 0.5 | 610 | 8 | 92 |
| 16 | - | 4.0 | 0.4 | 630 | 6 | 94 |
| 17 | - | 8.5 | 3.0 | 510 | 0 | 100 |
| 18 | - | 8.0 | 3.5 | 530 | 0 | 100 |

As is apparent from the results shown in Table 1, specimens 1 to 5, in which the stabilizing agent is yttrium oxide as a compound containing yttrium, showed large values of the three-point bending strength. In particular, it was found that specimens Nos. 2 to 4, in which the content of the stabilizing agent is not less than 2.0 mol nor more than 4.0 mol%, showed the values of the three-point bending strength of more than 900 MPa, and have excellent mechanical properties.

Also, specimens Nos. 6 to 18, in which the stabilizing agent is cerium oxide as a compound containing cerium, and dysprosium oxide as a compound containing dysprosium, showed less proportion of a monoclinic crystal. It was found that specimens Nos. 7 to 9, 12 and 13 in which the content of cerium oxide as a compound containing cerium is not less than 4.0 mol% nor more than 8.0 mol%, and the content of dysprosium oxide as a compound containing dysprosium is not less than 0.5 mol% nor more than 3.0 mol%, have the three-point bending strength of not less than 600 MPa and showed the proportion of a monoclinic crystal of 0%, and also have excellent heat resistance.

Reference Example 2

After weighing so that the contents of iron oxide, chromium oxide and aluminum oxide becomes the contents shown in Table 2 based on 100 parts by mass of a mixed powder comprising 98.0 mol% of a powder of zirconia and 2.0 mol% of a powder of yttrium oxide as a stabilizing agent, these materials were charged in a vibrating mill, together with water as a solvent, followed by mixing and grinding. In the case of mixing and grinding, balls that contain zirconia as the main component and have deep brown color tone were used.

Next, a predetermined amount of paraffin wax as a binder was added to the slurry obtained by mixing and grinding, and the mixture was dried by a spray drying method to obtain granules. For each specimen, a plurality of moldings that would be turned into inner links 20 of band links shown in Fig. 3 were made under a pressure of 98 MPa by a dry pressure molding method, and the obtained moldings were sintered at 1,450°C to obtain sintered bodies. The obtained sintered bodies were put into a centrifugal barrel polisher using media and green carborundom (GC) and then subjected to wet type barrel polishing for 24 hours to obtain the inner links 20 of band links.

After visually confirming the color tone, the values of the lightness index L* and the chromaticness indices a* and b* in the L*a*b* color space of CIE1976 of the decorative surface were measured in accordance with JIS Z 8722-2000, using a colorimeter (CR-221, manufactured by the former Minolta Co., Ltd.) using CIE standard light source of D65 as a light source, with a light receiving system being set under a((45-n)[45-0]), with the measurement diameter being set to 3 mm, respectively.

The color tone was evaluated by 50 monitors comprising 5 male and 5 female monitors in Europe, as a trendy center of the world, in each of 5 age brackets from 20s to 60s, by responding to questionnaire asking how they felt about 4 items of quality; dignified impression, high-grade impression, aesthetic satisfaction and aesthetic appreciation. It was decided that the specimen was "excellent (A)" when 90% or more of the monitors responded "positively" for all of 4 items, "good (B)" when 80% or more and less than 90% of the monitors responded positively for one of four items, and "poor (C)" when less than 80% of the monitors responded positively for any one of four items. Evaluation by monitors was conducted in a state where the inner links 20 of a plurality of specimens like watch bands are arranged.

The contents of iron oxide, chromium oxide and aluminum oxide were obtained by determining the content of each element using fluorescent X-ray spectroscopy, and converting the content to that of oxide. The results are shown in Table 2.

Table 2

| Specimen No. | Iron oxide (% by mass) | Chromium oxide (% by mass) | Aluminum oxide (% by mass) | Color tone | Lightness index L* | Chromaticness indices | | Dignified impression (%) | High-grade impression (%) | Aesthetic satisfaction (%) | Aesthetic appreciation (%) | Evaluation |
|---|---|---|---|---|---|---|---|---|---|---|---|---|
| | | | | | | a* | b* | | | | | |
| 19 | 0.4 | 0.1 | 0.3 | Deep brown color | 23 | 16 | 16 | 80 | 84 | 86 | 82 | B |
| 20 | 0.4 | 0.5 | 1.1 | Deep brown color | 22 | 16 | 17 | 82 | 88 | 88 | 80 | B |
| 21 | 0.4 | 0.5 | 2.0 | Deep brown color | 23 | 17 | 18 | 80 | 82 | 82 | 84 | B |
| 22 | 0.5 | 0.05 | 0.3 | Deep brown color | 21 | 14 | 16 | 84 | 86 | 88 | 86 | B |
| 23 | 0.5 | 0.1 | 0.3 | Deep brown color | 20 | 13 | 15 | 90 | 90 | 92 | 90 | A |
| 24 | 0.5 | 0.6 | 1.2 | Deep brown color | 19 | 13 | 13 | 92 | 90 | 92 | 90 | A |
| 25 | 0.5 | 1.0 | 2.0 | Deep brown color | 18 | 11 | 12 | 94 | 96 | 96 | 94 | A |
| 26 | 1.0 | 0.5 | 1.2 | Deep brown color | 1.5 | 14 | 14 | 98 | 98 | 99 | 98 | A |
| 27 | 3.0 | 0.05 | 1.1 | Deep brown color | 15 | 17 | 13 | 88 | 88 | 88 | 86 | 13 |
| 28 | 3.0 | 0.1 | 0.2 | Deep brown color | 14 | 4 | 6 | 90 | 88 | 88 | 88 | B |

(continued)

| Specimen No. | Iron oxide (% by mass) | Chromium oxide (% by mass) | Aluminum oxide (% by mass) | Color tone | Lightness index L* | Chromaticness indices | | Dignified impression (%) | High-grade impression (%) | Aesthetic satisfaction (%) | Aesthetic appreciation (%) | Evaluation |
|---|---|---|---|---|---|---|---|---|---|---|---|---|
| | | | | | | a* | b* | | | | | |
| 29 | 3.0 | 0.1 | 0.3 | Deep brown color | 15 | 6 | 7 | 100 | 100 | 100 | 100 | A |
| 30 | 3.0 | 0.1 | 1.2 | Deep brown color | 16 | 11 | 14 | 98 | 100 | 98 | 98 | A |
| 31 | 3.0 | 0.1 | 2.0 | Deep brown color | 17 | 14 | 15 | 98 | 98 | 96 | 96 | A |
| 32 | 3.0 | 0.1 | 3 | Deep brown color | 18 | 15 | 17 | 88 | 90 | 88 | 88 | B |
| 33 | 3.0 | 0.5 | 1.1 | Deep brown color | 12 | 7 | 10 | 98 | 98 | 100 | 98 | A |
| 34 | 3.0 | 1.0 | 1.2 | Deep brown color | 6 | 5 | 7 | 98 | 100 | 96 | 96 | A |
| 35 | 3.0 | 3.0 | 1.2 | Deep brown color | 4 | 4 | 4 | 86 | 82 | 82 | 80 | B |
| 36 | 5.0 | 0.05 | 2.0 | Deep brown color | 4 | 10 | 12 | 88 | 86 | 84 | 84 | B |
| 37 | 5.0 | 0.1 | 0.3 | Deep brown color | 7 | 6 | 7 | 92 | 90 | 92 | 94 | A |

(continued)

| Specimen No. | Iron oxide (% by mass) | Chromium oxide (% by mass) | Aluminum oxide (% by mass) | Color tone | Lightness index L* | Chromaticness indices | | Dignified impression (%) | High-grade impression (%) | Aesthetic satisfaction (%) | Aesthetic appreciation (%) | Evaluation |
|---|---|---|---|---|---|---|---|---|---|---|---|---|
| | | | | | | a* | b* | | | | | |
| 38 | 5.0 | 0.5 | 1.1 | Deep brown color | 5 | 5 | 6 | 96 | 90 | 90 | 96 | A |
| 39 | 5.0 | 1.0 | 2.0 | Deep brown color | 5 | 5 | 5 | 94 | 92 | 92 | 92 | A |
| 40 | 6.0 | 0.1 | 0.3 | Deep brown color | 4 | 4 | 5 | 82 | 80 | 84 | 80 | B |
| 41 | 6.0 | 0.5 | 1.2 | Deep brown color | 4 | 4 | 5 | 86 | 82 | 82 | 82 | B |
| 42 | 6.0 | 1.0 | 0.3 | Deep brown color | 3 | 3 | 4 | 80 | 80 | 82 | 80 | B |
| 43 | 6.0 | 1.0 | 2.0 | Deep brown color | 4 | 5 | 4 | 82 | 82 | 80 | 82 | B |
| *44 | 0 | 0.1 | 1.1 | Pale gray color | 59 | -2 | 10 | 0 | 0 | 0 | 0 | C |
| *45 | 3.0 | 0 | 1.2 | Pale brown color | 21 | 4 | 16 | 78 | 80 | 78 | 82 | C |
| *46 | 3.0 | 0.1 | 0 | Pale black color | 19 | 4 | 4 | 80 | 80 | 78 | 82 | C |

The symbol * denotes specimen that is not within a scope of the present invention.

As is apparent from the results shown in Table 2, specimens Nos. 44 to 46, that do not contain any one of iron oxide, chromium oxide and aluminum oxide and are not within the scope of the present invention, showed pale color tone in the case of visually confirming the color tone, and got poor evaluation by monitors. In contrast, specimens Nos. 19 to 43 of the Reference Examples showed deep brown color with deep color tone because the specimens contain iron oxide, chromium oxide and aluminum oxide.

Among the Reference Examples, specimens Nos. 23 to 26, 29 to 31, 33, 34 and 37 to 39 were evaluated as "excellent" by monitors, and also evaluated by almost monitors higher in terms of dignified impression, high-grade impression and aesthetic satisfaction because the content of iron oxide and the content of chromium oxide are not less than 0.5% by mass nor more than 5.0% by mass and not less than 0.1% by mass nor more than 1.0% by mass, respectively, and the content of aluminum oxide is not less than 0.3% by mass nor more than 2.0% by mass, and also the lightness index L* is not less than 5 nor more than 20 in the L*a*b* color space of CIE1976 of the decorative surface, and both chromaticness indices a* and b* are not less than 5 nor more than 15 in the L*a*b* color space of the decorative surface.

Reference Example 3

After weighing so that the contents of iron oxide, chromium oxide, aluminum oxide and titanium oxide becomes the contents shown in Table 3 based on 100 parts by mass of a mixed powder comprising 98.0 mol% of a powder of zirconia and 2.0 mol% of a powder of yttrium oxide as a stabilizing agent, these materials were charged in a vibrating mill, together with water as a solvent, followed by mixing and grinding. Using the same production method as in Reference Example 2, specimens Nos. 47 to 52 each having a shape of inner links 20 of band links shown in Fig. 3 were obtained.

In the same manner as in Reference Example 2, the color tone of the surface of specimens Nos. 47 to 52 of the ceramics for decorative part was measured using a colorimeter. Then, the ceramics for decorative part of specimens Nos. 47 to 52 were ground from the surface for the time required to polish by 0.2 mm in depth using a centrifugal barrel polisher. Similar to the surface of the ceramics for decorative part, the color tone was measured by a colorimeter and was regarded as color tone of the inside of the ceramics for decorative part. The results are shown in Table 3.

Table 3

| Specimen No. | Iron oxide (% by mass) | Chromium oxide (% by mass) | Aluminium oxide (% by mass) | Titanium oxide (% by mass) | Color tone | Surface | | | Inside | | |
|---|---|---|---|---|---|---|---|---|---|---|---|
| | | | | | | Lightness index L* | Chromaticness indices | | Lightness index L* | Chromaticness indices | |
| | | | | | | | a* | b* | | a* | b* |
| 47 | 1.0 | 0.5 | 1.2 | 0 | Deep brown color | 15 | 6 | 7 | 15 | 12 | 15 |
| 48 | 1.0 | 0.5 | 1.2 | 0.1 | Deep brown color | 14 | 4 | 8 | 13 | 6 | 11 |
| 49 | 1.0 | 0.5 | 1.2 | 0.5 | Deep brown color | 13 | 3 | 5 | 12 | 5 | 8 |
| 50 | 1.0 | 0.5 | 1.2 | 1.0 | Deep brown color | 12 | 2 | 3 | 11 | 5 | 6 |
| 51 | 1.0 | 0.5 | 1.2 | 3.0 | Deep brown color | 11 | 2 | 1 | 10 | 4 | 4 |
| 52 | 1.0 | 0.5 | 1.2 | 3.5 | Deep brown color | 10 | 1 | 1 | 10 | 3 | 4 |

As is apparent from the results show in Table 3, it was confirmed that, compared with specimen No. 47 that does not contain titanium oxide, specimens Nos. 48 to 52 containing titanium oxide added therein show a small difference in color tone between the surface and the inside of decorative part ceramics. As is apparent from the results, it was found that it is possible to provide users with high aesthetic satisfaction over a long period of time because even when scratches are formed on the surface of the ceramics for decorative part, scratches are inconspicuous.

Reference Example 4

After weighing so that the contents of chromium oxide, iron oxide and aluminum oxide becomes the contents shown in Table 4 based on 100 parts by mass of a mixed powder comprising 92.5 mol% of a powder of zirconia, and 6.0 mol% of a powder of cerium oxide and 1.5 mol% of a powder of dysprosium oxide as a stabilizing agent, these materials were charged in a vibrating mill, together with water as a solvent, followed by mixing and grinding. In the case of mixing and grinding, balls that contain zirconia as the main component and have deep green color tone were used. In the same manner as in Reference Example 2 in the subsequent process, a plurality of inner links 20 of band links were obtained for each specimen.

In the same manner as in Reference Example 2, visual confirmation of the color tone of the decorative surface of the inner links 20, and the measurement of the value of the lightness index L* in the L*a*b* color space of CIE1976 of the decorative surface and the measurement of the values of the chromaticness indices a* and b* in the L*a*b* color space of the decorative surface of inner links 20 using a colorimeter were conducted. The color tone was evaluated by 50 monitors comprising 5 male and 5 female monitors in Europe, as a trendy center of the world, in each of 5 age brackets from 20s to 60s, by responding to questionnaire asking how they felt about 3 items of quality; dignified impression, high-grade impression and aesthetic satisfaction. It was decided that the specimen was "excellent (A)" when 90% or more of the monitors responded "positively" for all of 3 items, "good (B)" when not less than 80% and less than 90% of the monitors responded positively for one or more of three items, and "poor (C)" when less than 80% of the monitors responded positively for any one of three items. The contents of iron oxide, chromium oxide and aluminum oxide can be obtained by semi-quantitative analysis of elements using an X-ray fluorescence analyzer by a FP method, and converting the content to that of oxide. The results are shown in Table 4.

Table 4

| Specimen No. | Iron oxide (% by mass) | Chromium oxide (% by mass) | Aluminium oxide (% by mass) | Color tone | Lightness index L* | Chromaticness indices | | Dignified impression (%) | High-grade impression (%) | Aesthetic satisfaction (%) | Evaluation |
|---|---|---|---|---|---|---|---|---|---|---|---|
| | | | | | | a* | b* | | | | |
| 53 | 0.04 | 3.0 | 0.05 | Deep green color | 23 | -8.2 | -1.5 | 82 | 80 | 84 | B |
| 54 | 0.04 | 0.49 | 0.3 | Deep green color | 47 | 2.5 | 1.8 | 84 | 84 | 86 | B |
| 55 | 0.04 | 1.0 | 0.3 | Deep green color | 46 | -4.0 | 11.9 | 84 | 84 | 84 | B |
| 56 | 0.04 | 1.0 | 0.8 | Deep green color | 48 | -0.5 | 8.5 | 86 | 82 | 82 | B |
| 57 | 0.05 | 0.49 | 0.3 | Deep green color | 45 | 2.2 | 1.9 | 84 | 86 | 84 | B |
| 58 | 0.05 | 0.5 | 0.04 | Deep green color | 44 | 2.1 | 3.5 | 86 | 84 | 88 | B |
| 59 | 0.05 | 0.5 | 0.3 | Deep green color | 43 | 1.5 | 2.8 | 90 | 90 | 90 | A |
| 60 | 0.05 | 0.5 | 0.8 | Deep green color | 40 | 2.0 | 2.2 | 90 | 92 | 92 | A |
| 61 | 0.05 | 1.0 | 0.3 | Deep green color | 37 | -0.8 | 6.5 | 92 | 90 | 92 | A |
| 62 | 0.05 | 2.0 | 0.3 | Deep green color | 33 | -4.0 | 13.8 | 94 | 92 | 94 | A |

| Specimen No. | Iron oxide (% by mass) | Chromium oxide (% by mass) | Aluminium oxide (% by mass) | Color tone | Lightness index L* | Chromaticness indices | | Dignified impression (%) | High-grade impression (%) | Aesthetic satisfaction (%) | Evaluation |
|---|---|---|---|---|---|---|---|---|---|---|---|
| | | | | | | a* | b* | | | | |
| 63 | 0.05 | 3.0 | 0.3 | Deep green color | 25 | -8.0 | 20.0 | 94 | 92 | 92 | A |
| 64 | 0.05 | 3.1 | 0.3 | Deep green color | 23 | -8.3 | 20.5 | 88 | 90 | 88 | B |
| 65 | 0.1 | 1.0 | 0.04 | Deep green color | 24 | -5.0 | 13.5 | 84 | 86 | 86 | B |
| 66 | 0.1 | 1.0 | 0.05 | Deep green color | 26 | -4.5 | 13.2 | 90 | 90 | 92 | A |
| 67 | 0.1 | 1.0 | 0.3 | Deep green color | 43 | -3.0 | 11.8 | 96 | 98 | 98 | A |
| 68 | 0.1 | 1.0 | 0.8 | Deep green color | 45 | -2.5 | 11.0 | 92 | 90 | 90 | A |
| 69 | 0.1 | 1.0 | 0.81 | Deep green color | 46 | -2.3 | 9.8 | 86 | 84 | 84 | B |
| 70 | 0.2 | 1.0 | 0.3 | Deep green color | 40 | -0.4 | 14.6 | 100 | 98 | 100 | A |
| 71 | 0.3 | 1.0 | 0.3 | Deep green color | 31 | -1.2 | 15.6 | 98 | 98 | 100 | A |

| Specimen No. | Iron oxide (% by mass) | Chromium oxide (% by mass) | Aluminium oxide (% by mass) | Color tone | Lightness index L* | Chromaticness indices | | Dignified impression (%) | High-grade impression (%) | Aesthetic satisfaction (%) | Evaluation |
|---|---|---|---|---|---|---|---|---|---|---|---|
| | | | | | | a* | b* | | | | |
| 72 | 0.49 | 3.0 | 0.04 | Deep green color | 22 | -7.5 | 19.9 | 88 | 86 | 86 | B |
| 73 | 0.49 | 0.49 | 0.8 | Deep green color | 42 | 2.1 | 2.5 | 86 | 84 | 82 | B |
| 74 | 0.49 | 0.5 | 0.3 | Deep green color | 44 | 1.7 | 3.1 | 90 | 94 | 92 | A |
| 75 | 0.49 | 1.0 | 0.3 | Deep green color | 25 | -2.0 | 18.4 | 96 | 94 | 96 | A |
| 76 | 0.49 | 3.0 | 0.8 | Deep green color | 28 | -3.5 | 15.8 | 92 | 96 | 92 | A |
| 77 | 0.5 | 1.0 | 0.3 | Deep green color | 24 | -2.2 | 18.8 | 88 | 88 | 90 | B |
| 78 | 0.5 | 3.1 | 0.3 | Deep green color | 20 | -8.5 | 20.3 | 84 | 84 | 84 | B |
| *79 | 0,1 | 1.0 | 0 | Green color | 49 | -28.0 | -15.0 | 78 | 76 | 80 | C |
| *80 | 0 | 1.0 | 0.3 | Pale green color | 1.9 | 2.2 | 1.9 | 72 | 70 | 66 | C |
| *81 | 0.1 | 0 | 0.3 | Pale red color | 22 | 35.0 | 31.0 | 70 | 76 | 74 | C |

The symbol * denotes specimen that is not within a scope of the present invention.

EP 2 266 934 B1

As is apparent from the results shown in Table 4, specimens Nos. 79 to 81, that do not contain any one of iron oxide, chromium oxide and aluminum oxide and are not within the scope of the present invention, did not show deep color tone in the case of visually confirming the color tone. In contrast, specimens Nos. 53 to 78 of the Reference Examples showed deep green color with deep color tone because the specimens contain iron oxide, chromium oxide and aluminum oxide, and got excellent evaluation by monitors.

Among the Reference Examples, specimens Nos. 59 to 63, 66 to 68, 70, 71 and 74 to 76 were evaluated as "excellent" by monitors, and also evaluated by almost monitors higher in terms of dignified impression, high-grade impression and aesthetic satisfaction because the content of iron oxide is not less than 0.05% by mass and less than 0.5% by mass, the content of chromium oxide is not less than 0.5% by mass nor more than 3.0% by mass, the content of aluminum oxide is not less than 0.05% by mass nor more than 0.8% by mass, and also the lightness index $L^*$ is not less than 20 nor more than 45 in the $L^*a^*b^*$ color space of CIE1976 of the decorative surface, the chromaticness indice $a^*$ is not less than -8 nor more than 2 in the $L^*a^*b^*$ color space of CIE1976 of the decorative surface and the chromaticness indice $b^*$ is not less than 2 nor more than 20 in the $L^*a^*b^*$ color space of the decorative surface.

Example 5

Next, with respect to ceramics for decorative part of the present invention, a test of confirming a change in color tone depending on whether or not hafnium oxide was added, and the additive amount of the hafnium oxide, as well as an evaluation by monitors was carried out.

After weighing so that the contents of iron oxide, chromium oxide, aluminum oxide and hafnium oxide becomes the contents shown in Table 5 based on 100 parts by mass of a mixed powder comprising 92.5 mol% of a powder of zirconia, and 6.0 mol% of a powder of cerium oxide and 1.5 mol% of a powder of dysprosium oxide as a stabilizing agent, these materials were charged in a vibrating mill, together with water as a solvent, followed by mixing and grinding. In the case of mixing and grinding of samples Nos. 82 to 85, balls that contain zirconia as the main component and have deep blown color tone were used. In the case of mixing and grinding of samples Nos. 86 to 89, balls that contain zirconia as the main component and have deep green color tone were used. In the same manner as in Reference Example 2 in the subsequent process, a plurality of inner links 20 of band links were obtained for each specimen.

In the same manner as in Reference Example 2, visual confirmation of the color tone of the decorative surface of the inner links 20, and the measurement of the value of the lightness index $L^*$ in the $L^*a^*b^*$ color space of CIE1976 of the decorative surface and the measurement of the values of the chromaticness indices $a^*$ and $b^*$ in the $L^*a^*b^*$ color space of the decorative surface of inner links 20 using a colorimeter were conducted. The color tone was evaluated by 50 monitors comprising 5 male and 5 female monitors in Europe, as a trendy center of the world, in each of 5 age brackets from 20s to 60s, by responding to questionnaire asking how they felt about 3 items of quality; dignified impression, high-grade impression and aesthetic satisfaction. The proportion of the monitors responded "positively" for each item was calculated. The contents of iron oxide, chromium oxide, aluminum oxide and hafnium oxide can be obtained by semi-quantitative analysis of elements using an X-ray fluorescence analyzer by a FP method, and converting the content to that of oxide. The results are shown in Table 5.

Table 5

| Specimen No. | Iron oxide (% by mass) | Chromium oxide (% by mass) | Aluminum oxide (% by mass) | Hafnium oxide (% by mass) | Color tone | Lightness index L* | Chromaticness indices | | Dignified impression (%) | High-grade impression (%) | Aesthetic satisfaction (%) |
|---|---|---|---|---|---|---|---|---|---|---|---|
| | | | | | | | a* | b* | | | |
| 82 | 0.4 | 0.5 | 1.1 | 0 | Deep brown color | 22 | 8.0 | 16.0 | 82 | 88 | 88 |
| 83 | 0.4 | 0.5 | 1.1 | 0.5 | Deep brown color | 20 | 7.0 | 15.0 | 86 | 92 | 92 |
| 84 | 0.4 | 0.5 | 1.1 | 1.8 | Deep brown color | 19 | 7.0 | 14.0 | 84 | 94 | 98 |
| 85 | 0.4 | 0.5 | 1.1 | 3.0 | Deep brown color | 19 | 7.0 | 13.0 | 84 | 94 | 96 |
| 86 | 0.04 | 1.0 | 0.3 | 0 | Deep green color | 46 | -4.0 | 11.9 | 84 | 84 | 84 |
| 87 | 0.04 | 1.0 | 0.3 | 0.5 | Deep green color | 42 | -0.2 | 10.5 | 86 | 92 | 92 |
| 88 | 0.04 | 1.0 | 0.3 | 1.8 | Deep green color | 38 | -0.2 | 9.8 | 94 | 96 | 98 |
| 89 | 0.04 | 1.0 | 0.3 | 3.0 | Deep green color | 35 | -0.1 | 9.2 | 86 | 96 | 94 |

As is apparent from the results shown in Table 5, it was found that compared to specimens Nos. 82 and 86 that do not contain hafnium oxide and are thus outside the scope of the present invention, specimens Nos. 83 to 85 and 87 to 89 that contained hafnium oxide show improved evaluation of three items such as dignified impression, high-grade impression and aesthetic satisfaction, and also by containing hafnium oxide, it is possible to impart subtle difference to a refractive index of light and to suppress translucency, resulting in deep color tone, increased dignified impression and enhanced high-grade impression, thus making it possible to provide users with high aesthetic satisfaction.

The ceramics for decorative part of the present invention was used to fabricate a decorative part for watch, such as watch case; a decorative part for mobile terminal, such as various control keys of mobile phone; a decorative part for fish line guide, such as fish line guide ring; a decorative part for daily life articles, such as a soap case or a coffee cup set; a decorative part for vehicle supplies, such as an emblem of model name; a decorative part for sports goods, such as studs of spiked shoes; a decorative part for musical instrument, such as a base plate of a guitar; and a decorative part for accessory, such as a case of an earphone unit were made. As a result, it was found that all decorative parts have dark color tone with quietness and subduedness, and therefore can provide users with dignified impression, high-grade impression and aesthetic satisfaction, and that use of the ceramics for decorative part of the present invention makes it possible to produce attractive products.

Description of Reference Numerals

      10A, 10B: Watch case
      20: Inner links
      30: Outer links
      40: Pin
      50: Watchband
      60: Mobile phone
      75: Fish line guide ring
      80: Soap case
      90: Coffee cup
      100: Vehicle body
      110: Golf club
      120: Shoes
      130: Guitar
      150: Earphone unit
      160: Eyeglasses

**Claims**

1. A ceramics for decorative part, comprising:

      zirconia containing a stabilizing agent as a main component;
      iron oxide;
      chromium oxide;
      aluminum oxide; and
      hafnium oxide,
      wherein the contents of iron oxide, chromium oxide and aluminum oxide and the color tones are as defined in (i) or (ii) below:

          (i) iron oxide not less than 0.5% by mass nor more than 5.0% by mass, chromium oxide not less than 0.1% by mass nor more than 1.0% by mass, and aluminum oxide not less than 0.3% by mass nor more than 2.0% by mass and
          wherein the lightness index $L^*$ is in a range of not less than 5 nor more than 20 in the $L^*a^*b^*$ color space of CIE1976 of a decorative surface,
          both chromaticness indices $a^*$ and $b^*$ are in a range of not less than 5 nor more than 15 in the $L^*a^*b^*$ color space of CIE1976 of the decorative surface, and
          the decorative surface exhibits deep brown color tone;
          (ii) iron oxide not less than 0.05% by mass and less than 0.5% by mass, chromium oxide not less than 0.5% by mass nor more than 3.0% by mass, and aluminum oxide not less than 0.05% by mass nor more than 0.8% by mass and

wherein the lightness index L* is in a range of not less than 25 nor more than 45 in the L*a*b* color space of CIE1976 of a decorative surface,

the chromaticness indice a* is in a range of not less than -8 nor more than 2 in the L*a*b* color space of CIE1976 of the decorative surface,

the chromaticness indice b* is in a range of not less than 2 nor more than 20 in the L*a*b* color space of CIE1976 of the decorative surface, and

the decorative surface exhibits deep green color tone.

2. The ceramics for decorative part according to Claim 1,
wherein the stabilizing agent is composed of a compound containing yttrium, and
the content of the stabilizing agent composed of the compound containing yttrium is not less than 2.0 mol% nor more than 4.0 mol%.

3. The ceramics for decorative part according to Claim 1,
wherein the stabilizing agent is composed of a compound containing cerium and a compound containing dysprosium,
the content of the compound containing cerium is not less than 4.0 mol% nor more than 8.0 mol%, and
the content of the compound containing dysprosium is not less than 0.5 mol% nor more than 3.0 mol%.

4. A decorative part for watch, comprising the ceramics for decorative part according to any of Claims 1 to 3.

5. A decorative part for mobile terminal, comprising the ceramics for decorative part according to any of Claims 1 to 3.

6. A decorative part for fish line guide, comprising the ceramics for decorative part according to any of Claims 1 to 3.

7. A decorative part for daily life articles, comprising the ceramics for decorative part according to any of Claims 1 to 3.

8. A decorative part for vehicle articles, comprising the ceramics for decorative part according to any of Claims 1 to 3.

9. A decorative part for sports goods, comprising the ceramics for decorative part according to any of Claims 1 to 3.

10. A decorative part for musical instrument, comprising the ceramics for decorative part according to any of Claims 1 to 3.

11. A decorative part for accessory, comprising the ceramics for decorative part according to any of Claims 1 to 3.

**Patentansprüche**

1. Keramik für dekorative Teile, umfassend:

Zirkonoxid, welches ein Stabilisierungsmittel enthält, als Hauptkomponente;
Eisenoxid;
Chromoxid;
Aluminiumoxid; und
Hafniumoxid,
worin die Mengenanteile von Eisenoxid, Chromoxid und Aluminiumoxid und die Farbtöne wie unter (i) oder (ii) nachstehend definiert sind:

(i) Eisenoxid in einer Menge von nicht weniger als 0,5 Masse%, jedoch nicht mehr als 5,0 Masse%, Chromoxid in einer Menge von nicht weniger als 0,1 Masse%, jedoch nicht mehr als 1,0 Masse%, und Aluminiumoxid in einer Menge von nicht weniger als 0,3 Masse%, jedoch nicht mehr als 2,0 Masse%, und worin der Helligkeitsindex L* einer dekorativen Oberfläche im Bereich von nicht kleiner als 5, jedoch nicht mehr als 20 im L*a*b*-Farbraum gemäß CIE1976 liegt,
beide Chromatizitätsindizes a* und b* einer dekorativen Oberfläche im Bereich von nicht kleiner als 5, jedoch nicht mehr als 15, im L*a*b*-Farbraum gemäß CIE1976 liegen, und
die dekorative Oberfläche einen tiefbraunen Farbton aufweist;
(ii) Eisenoxid in einer Menge von nicht weniger als 0,05 Masse% und weniger als 0,5 Masse%, Chromoxid in einer Menge von nicht weniger als 0,5 Masse%, jedoch nicht mehr als 3,0 Masse%, und Aluminiumoxid in einer Menge von nicht weniger als 0,05 Masse%, jedoch nicht mehr als 0,8 Masse%, und

worin der Helligkeitsindex L* einer dekorativen Oberfläche im Bereich von nicht kleiner als 25, jedoch nicht mehr als 45 im L*a*b*-Farbraum gemäß CIE1976 liegt,

der Chromazitätsindex a* einer dekorativen Oberfläche im Bereich von nicht kleiner als -8, jedoch nicht mehr als 2, im L*a*b*-Farbraum gemäß CIE1976 beträgt, und

der Chromazitätsindex b* einer dekorativen Oberfläche im Bereich von nicht kleiner als 2, jedoch nicht mehr als 20 im L*a*b*-Farbraum gemäß CIE1976 beträgt und

die dekorative Oberfläche einen tiefgrünen Farbton aufweist.

2. Keramik für dekorative Teile gemäß Anspruch 1, worin das Stabilisierungsmittel aus einer Verbindung, die Yttrium enthält, aufgebaut ist und

der Gehalt des Stabilisierungsmittels, das aus der Verbindung aufgebaut ist, die Yttrium enthält, nicht weniger als 2,0 mol%, jedoch nicht mehr als 4,0 mol% beträgt.

3. Keramik für dekorative Teile gemäß Anspruch 1, worin das Stabilisierungsmittel aus einer Verbindung, die Cer enthält, und einer Verbindung, die Dysprosium enthält, aufgebaut ist,

worin der Gehalt der Verbindung, die Cer enthält, nicht kleiner als 4,0 mol%, jedoch nicht größer als 8,0 mol%, ist, und

der Gehalt der Verbindung, die Dysprosium enthält, nicht kleiner als 0,5 mol%, jedoch nicht größer als 3,0 mol% ist.

4. Dekoratives Teil für eine Armbanduhr, umfassend die Keramik für dekorative Teile gemäß irgendeinem der Ansprüche 1 bis 3.

5. Dekoratives Teil für ein mobiles Terminal, umfassend die Keramik für dekorative Teile gemäß irgendeinem der Ansprüche 1 bis 3.

6. Dekoratives Teil für eine Angelschnurführung, umfassend die Keramik für dekorative Teile gemäß irgendeinem der Ansprüche 1 bis 3.

7. Dekoratives Teil für Gegenstände des täglichen Lebens, umfassend die Keramik für dekorative Teile gemäß irgendeinem der Ansprüche 1 bis 3.

8. Dekoratives Teil für Fahrzeugartikel, umfassend die Keramik für dekorative Teile gemäß irgendeinem der Ansprüche 1 bis 3.

9. Dekoratives Teil für Sportausrüstungen, umfassend die Keramik für dekorative Teile gemäß irgendeinem der Ansprüche 1 bis 3.

10. Dekoratives Teil für Musikinstrumente, umfassend die Keramik für dekorative Teile gemäß irgendeinem der Ansprüche 1 bis 3.

11. Dekoratives Teil für Accessoires, umfassend die Keramik für dekorative Teile gemäß irgendeinem der Ansprüche 1 bis 3.

**Revendications**

1. Céramique destinée à une pièce décorative, comprenant :

de la zircone qui contient un agent stabilisant en tant que composant principal ;
de l'oxyde de fer ;
de l'oxyde de chrome ;
de l'oxyde d'aluminium ; et
de l'oxyde d'hafnium,
dans laquelle les teneurs en oxyde de fer, en oxyde de chrome et en oxyde d'aluminium, et les tons de couleurs sont définis dans les paragraphes (i) ou (ii) ci-dessous :

(i) la teneur en oxyde de fer n'est pas inférieure à 0,5 % en masse et n'est pas supérieure à 5,0 % en masse, la teneur en oxyde de chrome n'est pas inférieure à 0,1 % en masse et n'est pas supérieure à 1,0 % en masse, et la teneur en oxyde d'aluminium n'est pas inférieure à 0,3 % en masse et n'est pas supérieure à 2,0 % en masse ; et

dans laquelle l'indice de luminosité L* se situe dans une plage comprise entre 5 et 20 dans l'espace chromatique L*a*b*de la norme CIE1976 d'une surface décorative ;

dans laquelle les indices de chromie a* et b* se situent dans une plage comprise entre 5 et 15 dans l'espace chromatique L* a* et b* de la norme CIE1976 de la surface décorative ; et

dans laquelle la surface décorative présente un ton de couleur brun foncé ;

(ii) la teneur en oxyde de fer n'est pas inférieure à 0,05 % en masse et n'est pas supérieure à 0,5 % en masse, la teneur en oxyde de chrome n'est pas inférieure à 0,5 % en masse et n'est pas supérieure à 3,0 % en masse, et la teneur en oxyde d'aluminium n'est pas inférieure à 0,05 % en masse et n'est pas supérieure à 0,8 % en masse ; et

dans laquelle l'indice de luminosité L* se situe dans une plage comprise entre 25 et 45 dans l'espace chromatique L*a*b* de la norme CIE1976 d'une surface décorative ;

dans laquelle l'indice de chromie a* se situe dans une plage comprise entre - 8 et 2 dans l'espace chromatique L* a*b* de la norme CIE1976 de la surface décorative ;

dans laquelle l'indice de chromie b* se situe dans une plage comprise entre 2 et 20 dans l'espace chromatique L* a*b* de la norme CIE1976 de la surface décorative ; et

dans laquelle la surface décorative présente un ton de couleur vert foncé.

2. Céramique destinée à une pièce décorative selon la revendication 1,
dans laquelle l'agent stabilisant se compose d'un composé qui contient de l'yttrium ; et
dans laquelle la teneur en agent stabilisant composé du composé qui contient de l'yttrium, se situe dans une plage comprise entre 2,0 mol % et 4,0 mol %.

3. Céramique destinée à une pièce décorative selon la revendication 1,
dans laquelle l'agent stabilisant se compose d'un composé qui contient du cérium et d'un composé qui contient du dysprosium ;
la teneur en composé qui contient du cérium est comprise entre 4,0 mol % et 8,0 mol % ; et
la teneur en composé qui contient du dysprosium est comprise entre 0,5 mol % et 3,0 mol %.

4. Pièce décorative destinée à une montre, comprenant la céramique destinée à une pièce décorative selon l'une quelconque des revendications 1 à 3.

5. Pièce décorative destinée à un terminal mobile, comprenant la céramique destinée à une pièce décorative selon l'une quelconque des revendications 1 à 3.

6. Pièce décorative destinée à un anneau de guidage de canne à pêche, comprenant la céramique destinée à une pièce décorative selon l'une quelconque des revendications 1 à 3.

7. Pièce décorative destinée à des articles de la vie quotidienne, comprenant la céramique destinée à une pièce décorative selon l'une quelconque des revendications 1 à 3.

8. Pièce décorative destinée à des articles de véhicules, comprenant la céramique destinée à une pièce décorative selon l'une quelconque des revendications 1 à 3.

9. Pièce décorative destinée à des articles sportifs, comprenant la céramique destinée à une pièce décorative selon l'une quelconque des revendications 1 à 3.

10. Pièce décorative destinée à un instrument de musique, comprenant la céramique destinée à une pièce décorative selon l'une quelconque des revendications 1 à 3.

11. Pièce décorative destinée à un accessoire, comprenant la céramique destinée à une pièce décorative selon l'une quelconque des revendications 1 à 3.

Fig. 1(a)

Fig. 1(b)

*Fig. 2*

Fig. 3

*Fig. 4*

*Fig. 5*

*Fig. 6(a)*

75

*Fig. 6(b)*

75

74

76

77

79

78

Fig. 7

80

82

81

83

84

85

*Fig. 8*

*Fig. 9*

## Fig. 10

*Fig. 11*

110

112

111

113F

114

113

113S

*Fig. 12*

120

122

121

*Fig. 13*

## Fig. 14

150

151

152

153

154

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000072543 A
- JP 61141668 A

- EP 0826645 A2

**Non-patent literature cited in the description**

- *Marubeni America Corporation Sunnyvale office homepage,* 20 February 2008, www.marubenisunny-vale.com/high_strengthened_glass.html